Europäisches Patentamt

European Patent Office

Office européen des brevets

(11) Publication number: **0 050 842**

**B1**

(12) **EUROPEAN PATENT SPECIFICATION**

(45) Date of publication of patent specification: **20.01.88**

(51) Int. Cl.⁴: **G 06 K 9/68,** A 61 B 5/10

(21) Application number: **81108708.9**

(22) Date of filing: **22.10.81**

(54) **Fingerprint minutiae matcher.**

(30) Priority: **27.10.80 US 200703**

(43) Date of publication of application:
**05.05.82 Bulletin 82/18**

(45) Publication of the grant of the patent:
**20.01.88 Bulletin 88/03**

(84) Designated Contracting States:
**IT**

(56) References cited:
**DE-A-2 550 152
DE-A-2 732 382
US-A-4 083 035
US-A-4 135 147
US-A-4 151 512**

(73) Proprietor: **DE LA RUE PRINTRAK, INC.
1250 North Tustin Avenue
Anaheim, CA 92807 (US)**

(72) Inventor: **Elsey, John Charles
1311 E.Adams Avenue
Orange California 92667 (US)**

(74) Representative: **Skone James, Robert Edmund
et al
GILL JENNINGS & EVERY 53-64 Chancery Lane
London WC2A 1HN (GB)**

Courier Press, Leamington Spa, England.

EP 0 050 842 B1

# 0 050 842

**Description**

## BACKGROUND OF THE INVENTION

A fingerprint can be characterized by the locations and angular orientations of the ridge endings and ridge bifurcations within the fingerprint which data are referred to in this specification as "minutiae". Machines for the detection and listing of fingerprint minutiae are described in a number of U.S. Patents, including Nos. 3,611,290; 4,083,035; and 4,151,512.

This invention pertains to processes and machines for the automatic comparison of one fingerprint, referred to here as the "search" fingerprint with another fingerprint, referred to as the "file" fingerprint, to determine if the two prints were made by the same finger.

A minutia pattern matcher invented by Riganati and Vitols is described in U.S. Patent No. 4,135,147. The present invention is closely related to the minutia pattern matcher invented by Riganati and Vitols. U.S. Patent No. 4,135,147 describes, in some detail, the prior art and the background to which both this invention and the minutiae pattern matcher pertain.

The minutia pattern matcher of Riganati and Vitols generates a "relative information vector" ("RIV") for each minutia in the unidentified ("search") fingerprint, which RIV is a detailed description of a minutia's immediate neighborhood of nearly surrounding minutiae. The matcher compares each RIV in the search print with each RIV in the known ("file") print and generates a match score for each comparison (see Cols. 8—12 of U.S. Patent No. 4,135,147). By means of a histogram, the matcher makes a global comparison of the individual matches and generates a "final score" which indicates, quantitatively, how closely the search print compares with the file print (see Col. 12 of U.S. Patent No. 4,135,147). Because the minutia pattern matcher compares each RIV in the search print with each RIV in the file print, the process involves a significant amount of effort. A similar method is described in DE—A—2732382 which is used as the basis for the preamble of claims 1 and 9.

The present invention significantly reduces the effort expended in the comparison, by, in effect, comparing each search RIV with only a single, mating file RIV. The details of the present process also differ from those of the minutia pattern matcher.

In accordance with one aspect of the present invention, a method according to claim 9 is provided.

In accordance with another aspect of the present invention, a method according to claim 1 is provided.

This invention provides a process that compares or "matches" fingerprint minutia patterns. The result of this matching process is a match score which is a measure of the similarity of the two minutia patterns, with a high match score indicating a high degree of similarity. The process may be implemented on a general purpose computer, such as the IBM 7090, that has been programmed in accord with this specification.

Preferably, step a) comprises terminating the comparison between the minutiae of a search fingerprint and the minutiae of a file fingerprint whenever the degree of registration of the search minitiae with the file minutiae fails to exceed an operator selected threshold.

The method according to the another aspect of the invention may further comprise the step of terminating the comparison if the largest of the maximum numbers of mating pairs fails to exceed a threshhold.

An example of a method according to the present invention will now be described with reference to the accompanying drawings, in which:—

Figures 1A and 1B are examples of search and file minutiae respectively;

Figure 1C shows the search minutiae of Figure 1A rotated and superimposed on the file minutiae in Figure 1B;

Figure 2A, B and C show examples of mating and non-mating pairs of minutiae;

Figure 3 shows the search minutiae of Figure 1a with each minutiae numbered;

Figures 4A and 4B contain a second example of search and file minutia patterns;

Figure 5 is a two-dimensional histogram for the example in Figures 4A and 4B;

Figure 6 is a flow diagram of the logic used to compare the search and file minutiae;

Figure 7 contains an example of overlaid plots of search and file minutiae;

Figure 8 is a logic flow illustrating the detailed logic for processing the NHIT list of Table 8; and

Figure 9 is a flow diagram illustrating the minutia pairing logic.

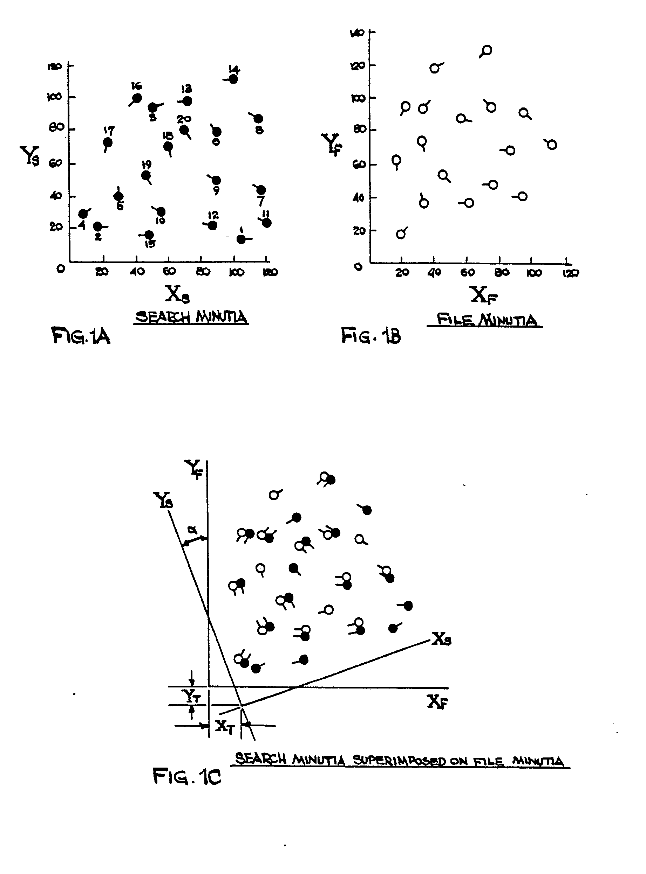

The inputs to the machine are (1) the minutia data for the fingerprints being matched (one print is designated the search print, the other the file print), which minutia data consist of the locations $(x, y)$ and angular orientations $(\theta)$ of the minutiae, and (2) a set of machine operating parameters. The minutia data are ordered in lowest to highest values of $\theta$. Tables 1(a) and 9(b) show an example of minutia data in tabular form (the format in which the computer stores and uses the data), and Figures 1A, B, and C are plots of such data.

The object of the invention is to measure the similarity between two minutia patterns, such as those shown in Figures 1A and 1B. A high degree of similarity exists between the patterns in Figures 1A and 1B, as is shown in the superimposed patterns of Figure 1C where the search minutia of Figure 1A have been rotated by an angle $\alpha$ and translated in X an amount $X_T$ and in Y an amount $Y_T$, and then superimposed on the file pattern.

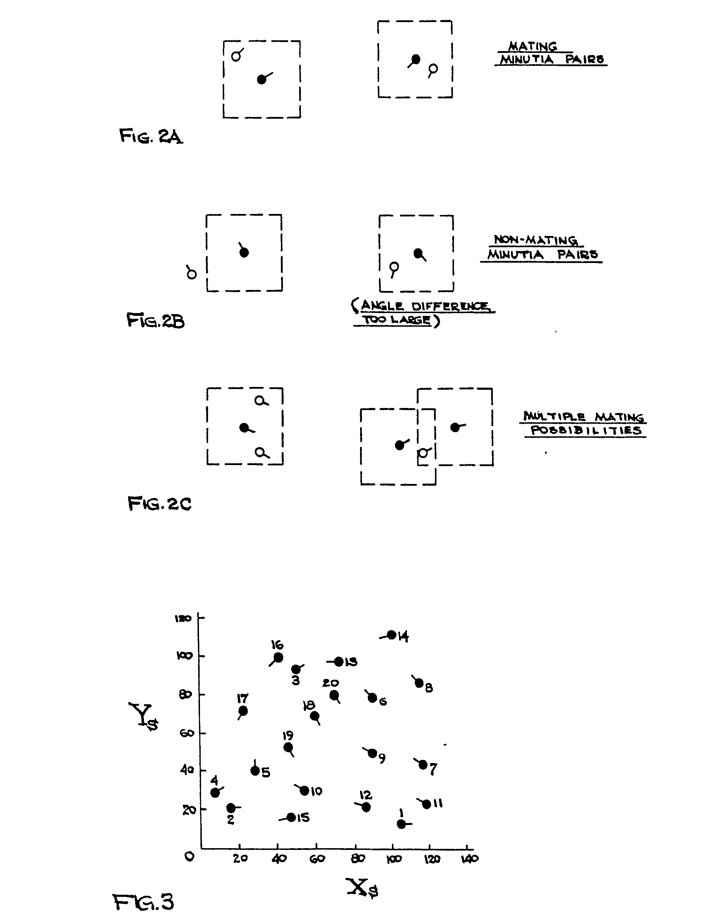

One measure of similarity is the number of corresponding minutiae. To determine this number, one

2

can think of a small box being drawn around each search minutia as shown in Figure 2A. If there is a file minutia within the box which also has a minutia angle close to the search minutia angle (say, within 25°), then the two minutiae are said to correspond, or to be mates. Figures 2A, B and C illustrate several cases of mating, non-mating, and multiple mating minutia pairs. There are 13 corresponding or mating minutia pairs in Figure 1C. This number of mating minutiae, designated $M_M$, is used as a preliminary measure of similarity.

If $M_M$ is sufficiently high, a score is computed for each search minutia based on the number of neighbouring search minutiae (up to some number such as eight) that also have a mating file minutia, and on the degree of correspondence between the neighbouring, mating file and search minutia. The match score for the entire fingerprint is the sum of the scores for each search minutia.

If the number of mating minutiae, $M_M$, is not greater than some specified threshold, the file print is considered to be unrelated to the search print, and the fingerprints are not compared further.

Table 2 is a listing of all the major steps in the comparison or matching process. A more detailed functional description of each of these steps is given in the following sections.

## DESCRIPTION OF THE PREFERRED EMBODIMENT

### 1.0 Preparation of Search Minutia Data
In a typical application of the invention, a single search fingerprint is compared against many file fingerprints. Certain computations, involving the initial search minutia data only, are done only once at the beginning of the series of comparisons.

### 1.1 Sort into Angle Order
To decrease the computation time, the search minutiae are sorted, based on their angle, in ascending order as shown in Table 1. If the minutiae are already sorted with respect to $\theta$, this step is skipped.

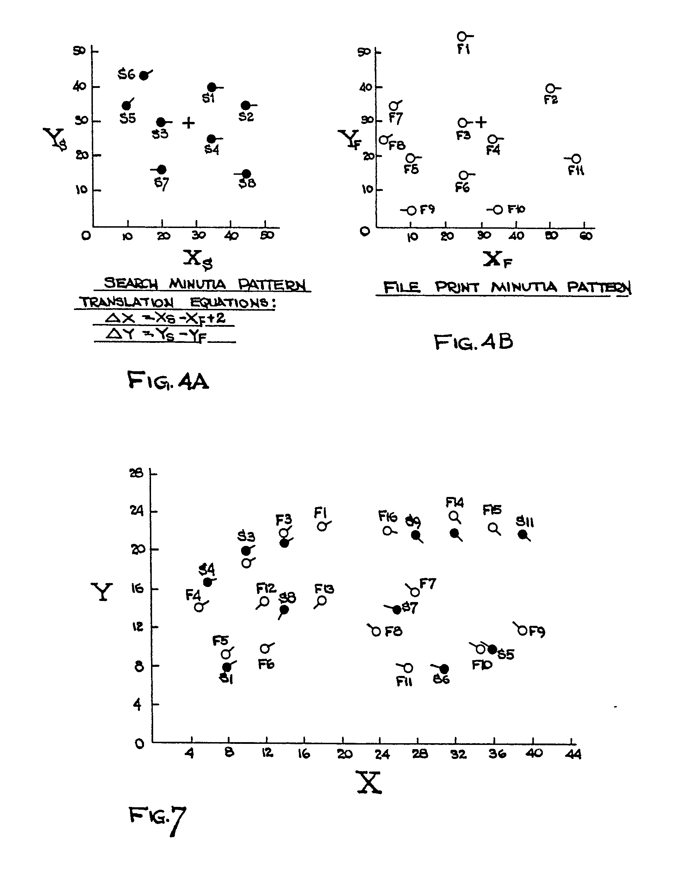

### 1.2 Find Closest Neighbors
Since the scoring for each pair of mating minutiae is dependent on the number of neighbors that also have mates, the $N_N$ nearest neighbors for each search minutia must be defined. The number $N_N$ is a match parameter selected by the machine operator and is typically chosen to be in the range of 6 to 12. The "nearness" measure is the sum of the absolute values of the differences in the X and Y coordinates between two minutiae. Such a measure is easily computed and results in a diamond shaped neighborhood area. Figure 3 shows the search minutiae of Figure 1A which each minutia numbered. Table 3 lists the nearest eight neighbors for some of the search minutiae. The nearest neighbors for ach minutia are determined by computing the distance from each minutia to all other minutiae and selecting the $N_N$ closest minutia as the nearest neighbors.

### 1.3 Rotate Search Minutiae for each Angular Position
Since the X, Y, $\theta$ minutia values for the search and for the file fingerprints initially are not located with respect to the unique coordinate system, it usually is necessary to rotate one of the minutia patterns with respect to the other to properly align the matching fingerprints, as illustrated, for example, in Figure 1C. There appears to be no straightforward method of computing a best rotation based on some criteria such as a least-squared-error fit. Accordingly, in this process, the search minutiae are rotated through a series of preselected angles and these rotated sets of minutiae are stored. In the matching process, each set of rotated search minutiae are compared with the file print and the set which gives the best match (as measured by the number of paired minutiae) is used in computing the match score for the pair of prints being compared.

In the preferred embodiment, a discrete set of rotations, $N_R$, spaced 5.6 degrees apart are used in the matching process. As set of ten such rotations covers a range of ± 28 degrees and normally is sufficient to allow for variations in fingerprint orientation. The number of rotations, $N_R$, is a match parameter specified by the operator, and can be made as large as desired in order to accommodate larger uncertainties in print orientation. Since a larger number of rotations would require more comparisons, it is desirable to use as small a value of $N_R$ as practicable.

Functionally, the rotated X and Y minutia values are computed by the matrix equation.

$$\begin{bmatrix} X_R \\ Y_R \end{bmatrix} = \begin{bmatrix} COS\alpha & SIN\alpha \\ SIN\alpha & COS\alpha \end{bmatrix} \begin{bmatrix} X_S \\ Y_S \end{bmatrix} \tag{1}$$

where $X_R, Y_R$ are the rotated minutia values, $X_S, Y_S$ are the initial search minitia values, and $\alpha$ is the rotation angle. In order to use only integer computations and to avoid using sine and cosine functions, the following approximations are used for the sine and cosine computations:

$$COS\alpha = 1 - 32/CDIV(N) \tag{2}$$

3

**0 050 842**

$$SIN\alpha = 32/SDIV(N) \qquad (3)$$

The CDIV(N) and SDIV(N) functions are represented by integer tables which have values for each N corresponding to discrete values of $\alpha$. Values of CDIV(N) and SDIV(N) are computed from the inverse of the above equations and have the form

$$CDIV(N) = \frac{32}{1 - COS\alpha} \qquad (4)$$

$$SDIV(N) = \frac{32}{SIN\alpha} \qquad (5)$$

where N has values 1, 2, ... $N_{RT}$,

$\alpha$ has values $(-N_{RT}+1)$ (5.6°), $(-N_{RT}+3)$ (5.6°), $(-N_{RT}+5)$ (5.6°).

... $(-N_{RT}+2N_R-3)$ (5.6°), $(-N_{RT}+2N_{RT}-1)$ (5.6°)

and $N_{RT}$ is the total number of rotations permissible and is an even integer.

The values of $\theta$ for each rotation can be obtained simply by adding an angle to each $\theta$ value equal to the rotation $\alpha$ defined above. This addition, however, is performed later in the matching process, thus avoiding the creation of an additional array of rotated values for $\theta$.

In order to minimise the computational errors in the rotation calculations, the search minutiae are initially centered over the origin. The rotation computations then are performed for the translated data set, and the rotated minutia sets then are retranslated to the first quadrant so that all X and Y values for the minutiae are positive.

## 2.0 PREPARATION OF FILE MINUTIA DATA

Very little preparation of the file print minutia data is necessary or desirable since these computations need to be performed for each file fingerprint with which the search print is compared. The file data are arranged in order with respect to $\theta$ and the minimum and maximum minutia X and Y values are determined for the file print, but these calculations need be done only once for each file print for instance, at the time the file print data is added to the data base. A simple computation also can be done at the time the file print is added to the data base to determine the quantization parameters for use with the histograms described in the next section.

## 3.0 PRINT REGISTRATION

print registration or orientation matching requires the determination of the best angular rotation and the X and Y offsets or translation that are necessary to superimpose the search minutia pattern upon the file minutia pattern. This task is accomplished by constructing for each of the $N_R$ rotations of the search minitia pattern, a two dimensional histogram of the displacements in X and Y needed to overlay each search minutia with each file minutia for which the values of $\theta$ differ by less than some threshold, which threshold is a matching parameter selected by the operator. If the computed displacements for a pair of search and file minutiae are greater than some specified threshold, this minutia pair is omitted from the histogram. An example of such a pair of minutia would be one near the top of one print and the other near the bottom of the other print. Such minitiae would not represent mating pairs. A large peak in the histogram indicates a large number of mating minutia pairs, and the coordinates of that peak give the X and Y offsets needed to give the best line up of the two minutia patterns for a particular angular rotation.

To illustrate and more precisely describe these operations, consider the example minutia patterns shown in Figures 4A and 4B, which example differs from the one shown in Figures 1—3. The search minutia pattern is one of the rotated sets of seach minutia patterns. If the file minutia pattern is shifted 10 units in X and 10 units in Y (10 is added to each of the minutia X and Y values), there is almost a perfect correspondence between the search and file minutia patterns. Table 4 contains a minutia comparison matrix. This matrix lists the result of comparing each search minutia (the leftmost column of the matrix) with each file minutia (the top row of the matrix). The matrix entries show the results of the comparison. The letter A indicates that the tail angles for the two minutiae corresponding to that matrix element (e.g., search minutia, S1, and file minutia F8) differ by more than the allowed amount (30 degrees).

The two numerical entries for each pair of file and search minutia (e.g., 24, −20 for S2, F1) indicate the increments in X and Y that must be added to the file minutia data in order to superimpose that file minitia on top of the search minutia after the centers of the search and file minutia patterns have been made coincident.

The coordinates for the center of the search print are the average of the X and Y values respectively for the search minutiae. The Y coordinates for the center of the file print are the mid-points between the maximum and minimum values of X and Y respectively for the file minutiae. The center for each minutia pattern is shown by the + symbol in Figures 4A and 4B.

The coordinate values shown for each minutia in the top row and left column of the comparison matrix of Table 4 are with respect to the center of the print. Thus, to compute the translations in X and Y, $\Delta X$ and

4

# 0 050 842

ΔY, that are required to superimpose two minutiae, such as S2 and F4, the values of the file minutia are subtracted from the values of the search minutia, as shown by the equations of Figure 4. For the S2, F4 minutia pair, these differences are 12 and 10 for X and Y, respectively as shown in the F4 column and S2 row of the comparison matrix. The +2 term in the X translation equation of Figure 4 is necessary to allow for the non-alignment of the center of the minutia patterns (the coordinates of the center of the search minutiae are 28, 30 and for the file print center are 30—30 producing a difference in the X coordinates of 2).

The entries of the letter L indicate that the translation required for the superposition of two minutiae (e.g., S2, F5) exceeds a threshold which is half of the file minutia pattern width for X and half of the file minutia pattern height for Y. Both the X and Y translations must be less than these thresholds to avoid an L entry. The width and height of the file minutia patterns of Figure 4 are 55 and 50, respectively.

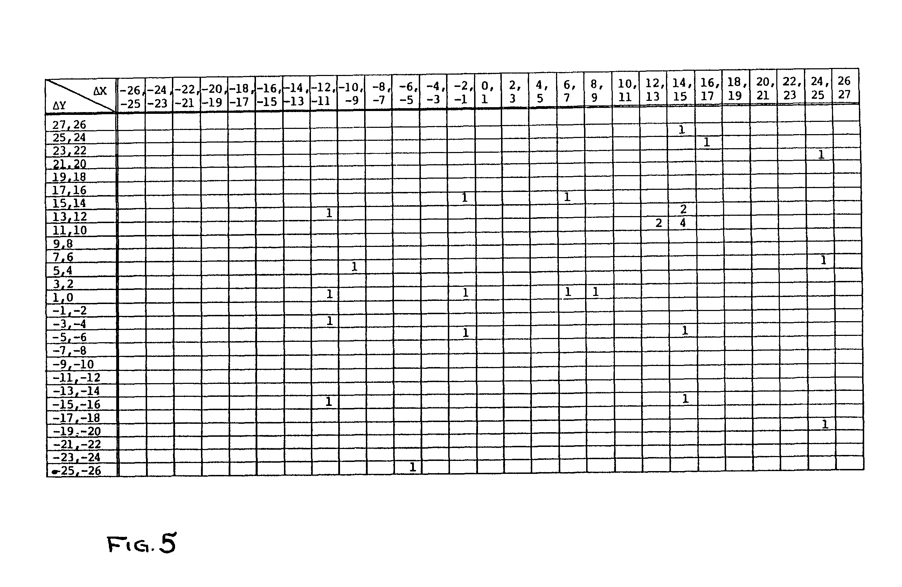

Using the numbers contained in the comparison matrix, a two dimensional histogram is constructed. Figure 5 shows such a histogram for the example of Figure 4. Each cell of the histogram corresponds to the translations in X and Y listed on the top and left edges of the histogram. The number within each cell indicates the number of minutia pairs that exist for a given X and Y translation of the search print. The hostogram is constructed by first setting all cells in the histogram to zero and then incrementing (by 1) each histogram cell that corresponds to the numerical entries in the comparison matrix of Table 4. Thus, for example, the minutia pair S2, F3, with a comparison matrix entry of 24, 5 causes the contents of the (24, 25; 5, 4) histogram cell to be incremented by one. As can be seen by an examination of Figures 4 and 5, all of the correct or proper corresponding minutia pairs (e.g., (S1, F3), (S3, F4) etc.), cause either the (14, 15; 11, 10) histogram cell or an adjacent cell to be incremented.

To determine from the histogram the best X, Y translation, a search is made of the histrogram cells to find the cell with the maximum value. The coordinates of the cell with the maximum value gives the translation values in X and Y which yield the maximum degree of matching. Because of the discrete nature of the process, a slight modification of the procedure is used to avoid edge or boundary problems that produce quantization errors. In the example, there actually are eight pairs of corresponding minutiae. Only four of these pairs are counted in the (14, 15; 11, 10) histogram cell. The counts for the other four pairs appear in the left and top adjacent cells due to slight variations in the spacing between minutiae of the two patterns. To allow for these edge or boundary problems, the maximum count for the histogram is computed based on the sum of the counts for four adjacent cells. Thus, the maximum count for the histogram of Figure 5 is eight, and using the center of the cluster of four cells that gives this maximum, the X and Y translations that best line up the two minutia patterns are (using integer computations) 13 and 11 (assuming an initial aligment of the print centers).

The actual mechanization of this alignment procedure, while functionally the same, is somewhat different computationally from that described in the example. One difference is that a comparison matrix as such is never constructed; the computations are done for each minutia pair comparison by means of two nested DO loops, with the histogram being updated at the completion of each minutia pair computation. The desirability of having the minutiae sorted by angle is apparent from an examination of the comparison matrix of Table 4, since all of the A entries for a given row are in one or two sequential groups which include at least one end of the row. Logic is used in the DO loop computation based on these sequential angle differences to reduce the number of minutia pair computations.

Other computation differences are concerned with the manner in which the boundary problem for the histogram is handled and the construction of the histogram for the matcher where, in effect, four more or less independent computations proceed in parallel.

The minutia pattern line-up or registration process is functionally identical to a two-dimensional discrete pattern correlation process wherein one pattern is placed on top of another, the number of corresponding features are counted, a correlation matrix element is incremented, the pattern is shifted a small increment, and the corresponding features again are counted, etc.

In order to determine the best rotation angle for lining up or registering two prints, histograms as described above are constructed in sequence for each rotation angle. The rotation angle which gives the maximum histogram entry is the best rotation angle. If there is more than one maximum in the histogram (i.e., two or more cells have the same count which is higher than all others), the coordinates for each maximum are computed and stored as well as the rotation angles. Such a condition represents two equally good pattern registrations as determined by the above registration process. The rest of the matching process is executed for each of these maximums (up to five) and a match score is computed for each. The highest resulting match score is taken as the print match score.

## 4.0 TEST FOR EARLY OUT

After the two prints have been registered, the maximum histogram entry, $M_M^*$, is a measure of how well the minutia patterns match since it is approximately the number of minutiae that are mates. (This measure is not exact because of pobbible double counting — one search minutia might be "paired" with more than one file minitia by the above process.) A comparison of $M_M^*$ is made with an early out threshold, $E_T$. $E_T$ is a matching parameter that is specified by the operator. The value of $E_T$ is dependent on the type of search prints used. A typical value for latent search prints is 15. If $M_M^* E_T$, a zero match score is assigned, and no further match computations are performed for these two prints. If $M_M^{*7} E_T$, a more refined minutia pairing and scoring procedure is used, as described in the following sections.

5

## 5.0 MINUTIA PAIRING AND SCORING PROCEDURE

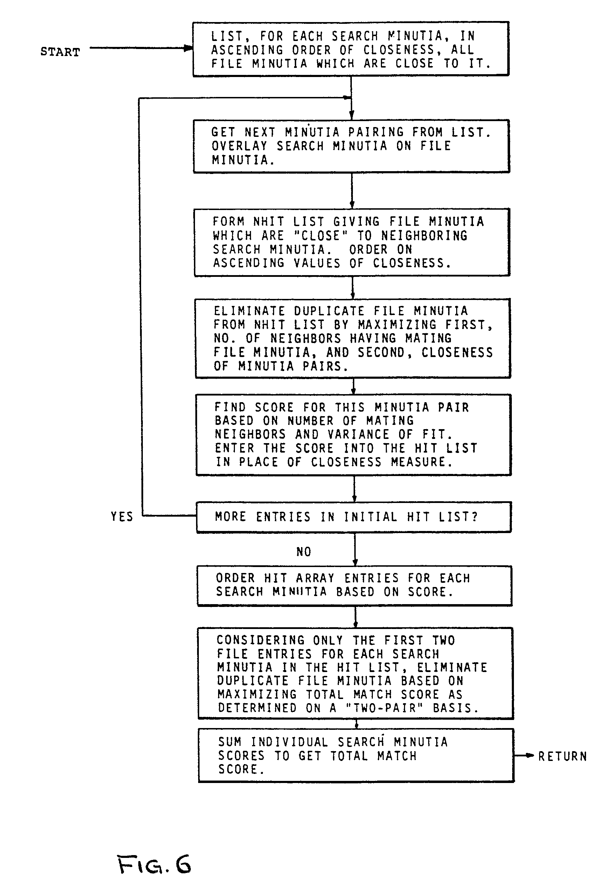

The process for minutia pairing and scoring is outlined in Figure 6. Figure 6 is a flow diagram of the pairing and scoring process. The various procedures indicated by the blocks in Figure 6 are discussed in more detail in the following subsections. The process is illustrated in Figure 7 for which the corresponding minutia data are tabulated in Table 5. Figure 7 contains an example of the overlaid plots corresponding to tabular listings of X, Y and θ minutia values and is used to illustrate the specifics of the process.

### 5.1 FORMATION OF INITIAL HIT LIST

The first step in the minutia pairing and scoring process is the formation of a list called the "HIT" list which is a list of the search and file minutiae which are near enough to each other to be considered as potential mating pairs of minutiae. Table 6 is a "HIT" list for the example illustrated in Figure 7 and lists for each search minutia those file minutiae which are "close to" it. In order for a file minutia to be considered close to a search minutia, the file X, Y and θ values must satisfy the equations

$$|X_{SI} - X_{Fj}| = \Delta X_{ij}, \Delta X_{ij} \leq E_X$$

$$|Y_{SI} - Y_{Fj}| = \Delta Y_{ij}, \Delta Y_{ij} \leq E_Y \tag{6}$$

$$|\theta_{SI} - \theta_{Fj}| = \Delta\theta_{ij}, \Delta\theta_{ij} \leq E_\theta$$

$X_{SI}$, $X_{Fj}$, $Y_{SI}$, $Y_{Fj}$, $\theta_{SI}$, and $\theta_{Fj}$ represent the ith search and the jth file X, Y, and θ minutia values respectively, and $E_X$, $E_Y$ and $E_\theta$ are the permissable X, Y and θ pairing errors.

For minutia pairs (i,j) which satisfy this criteria, a distance or closeness measure, $D_{ij}$, is computed as:

$$D_{ij} = \Delta X_{ij} + \Delta Y_{ij} + \Delta\theta_{ij}/S_\theta \tag{7}$$

where $S_\theta$ is a quantity used to scale the θ differences to the same range as the X and Y distances and depends on the units used to represent X, Y and θ. For X and Y measured in .008 inch units and θ measured in 5.6 degree units, $S_\theta$ would be 4. In addition to satisfying equations (6), in order for a file minutia to be considered close to a search minutia, the following distance relationship must also be satisfied:

$$D_{ij} \leq D_M \tag{8}$$

where $D_M$ is the permissable distance error. This distance measure is also shown for each of the minutia paris listed in Table 6. All file minutia which are "close" to a search minutia (up to a limit of four) are listed in the initial HIT list in ascending order of closeness as measured by $D_{ij}$, as shown in Table 6.

### 5.2 NEIGHBORHOOD HIT LIST

The rest of the minutia pairing and scoring procedure involves examining all possible search and file minutia combinations and selecting that combination which tends to maximize the match score under a closeness-of-fit scoring technique for the neighboring pairs of minutiae. To determine which neighboring search minutiae also have mating file minutiae, a list is formed for each mating search minutia, called the "NHIT" list. An example of an "NHIT" list appears in Tables 7(a)—7(e). The left-most column of this list is a list of the N closest search minutia to that search minutia (called here the neighborhood center minutia) for which the list is formed. The right-hand most column is a list of file minutia (up to two) which are close to the search minutia listed in the left-most column of the table. These neighborhood closeness and distance measures are computed in accord with equations (6), (7) and (8), although different values of $E_X$, $E_Y$, $E_\theta$, $S_\theta$, and $D_M$ (i.e., $E_{XN}$, $E_{YN}$, $E_{\theta N}$, $S_{\theta N}$, and $D_M$) can be specified. That is, the tolerances and scaling factors can be different for the HIT and NHIT lists. In Table 7(a), the NHIT list for the search and file pair of minutia (S4, F4) is shown together with the nearness or closeness measure for the four closest neighbors to minutia S4 (i.e., S3, S2, S8, S1). This list only includes the two closest file minutiae for a given search minutia. Duplicate file minutiae are eliminated from the list according to a set of logic which first maximizes the number of search minutiae having a mating file minutia, and then minimizes the distance or nearness measure when two pairs of minutiae are considered at a time.

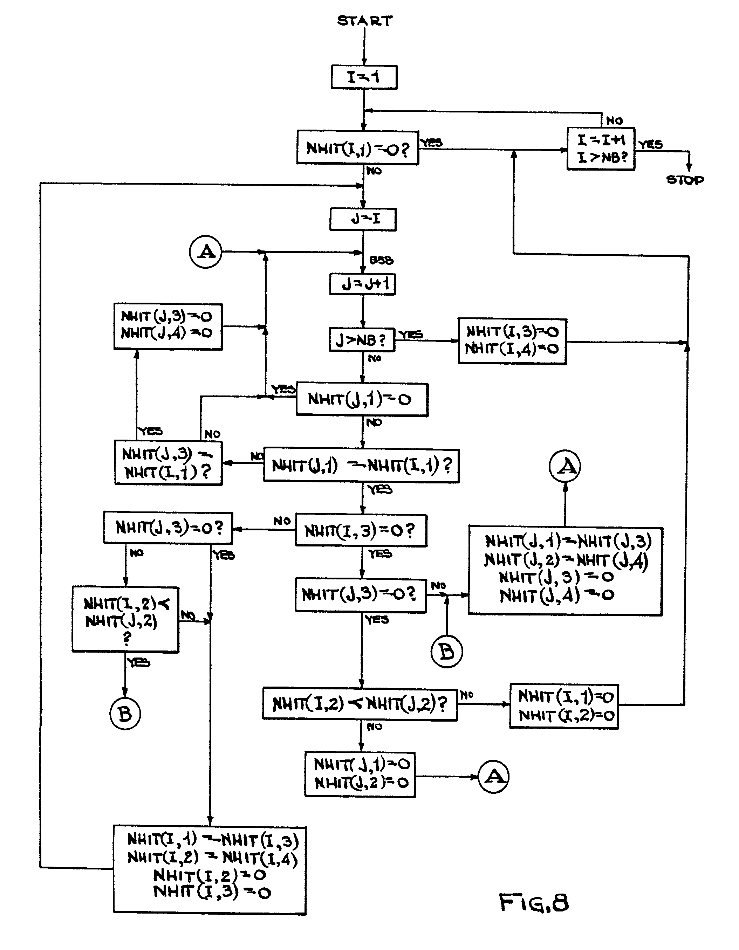

The operation of the logic is illustrated by means of the example NHIT list of Table 8 (the minitiae of the example are not related to those of the example in Table 5). The first minutia combination to be considered by the logic is the S1, F2 combination listed in the first row. However, an examination of the second row shows that F2 appears in this row also, and with a smaller distance than in row one. If minitia F2 is paired with S2 because of the smaller distance, then there is no minutia to pair with S1. In order to minimize the number of pairings, the selection is made as shown in the final pairing column of the list. the detailed logic for processing the NHIT list is shown in the follow chart of Figure 8. In Figure 8:

NB = the number of neighbors for each search minutia

NHIT(I,1) = closest file minutia to.the I search minutia in the NHIT list

NHIT(I,2) = distance measure between the I search minutia in the NHIT list and the NHIT (I,1) file minutia

NHIT(i,3) = next closest file minutia to the I search minutia in the NHIT list

NHIT(I,4) = distance measure between the I search minutia in the NHIT list and the NHIT(I,3) file minutia.

Following the logic of Figure 8 are working in a top-to-bottom fashion through the list to eliminate duplicate file minutiae and then selecting the pairing giving the smallest distance measure results in the pairing shown in the "final pairing" column of the list. This logic is not sufficiently complex to always produce an optimum solution since if the file entry for row three would have been (F7,2) instead of (F8,2), the final pairing for the first three rows would have been (F2,5), −, (F7,2) which is not as good as the selection −, (F2,2), (f7,2) for which the combined distance is 4 as compared to 7 for the less complex procedure. The simpler logic, however, is used in order to improve the matching speed since situations requiring the more complex logic are rare.

Once a NHIT list has been edited to eliminate duplicate file minutiae and the resulting, best search-file neighborhood minutia pairings have been determined (according to the above rules), the variance in the fit of the neighboring minutiae is computed. A combined variance over X, Y and $\theta$ is computed as:

$$\sigma^1 = \tfrac{1}{3} [\sigma_x^2 + \sigma_y^2 + \sigma_\theta^2/S_\theta] \qquad (9)$$

whereas:

$$\sigma_Y^2 = E\left[(\Delta X - M_{\Delta X})^2\right] = \frac{1}{N_M} \sum_{J=1}^{N_M} (\Delta X_j)^2 - \left[\frac{1}{N_M} \sum_{J=1}^{N_M} \Delta X_j\right]^2$$

$$\sigma_Y^2 = E\left[(\Delta Y - M_{\Delta Y})^2\right] = \frac{1}{N_M} \sum_{J=1}^{N_M} (\Delta Y_j)^2 - \left[\frac{1}{N_M} \sum_{J=1}^{N_M} \Delta Y_j\right]^2 \qquad (10)$$

$$\sigma_\theta^2 = E\left[(\Delta\theta - M_{\Delta Y})^2\right] = \frac{1}{N_M} \sum_{J=1}^{N_M} (\Delta\theta_j)^2 - \left[\frac{1}{N_M} \sum_{J=1}^{N_M} \Delta\theta_j\right]^2$$

$S_\theta$ is a quantity used to scale the $\sigma_\theta^2$ values to the same range as $\sigma_x^2$ and $\sigma_Y^2$. $\Delta X_u, \Delta Y_j, \Delta\theta_j$ are the X, Y and $\theta$ differences between neighboring search and file minutiae, and $N_M$ is the number of matching neighbors. Again $S_\theta$ is a function of the units used to measure X, Y and $\theta$. For X and Y measured in units of 0.008 inches and $\theta$ in units 5.6°, $S_\theta$ is in the range of 16—32.

In order to use integer arithmetic, equations (10) are computed using a different scale factor $S_\sigma$ to scale the computed $\sigma^2$ values to appropriate integer values. The value of $S_\sigma$ depends on the scoring table used and for the scoring table of Table 9, $S_\sigma = 4$. In FORTRAN notation, the equation for determining $\sigma_x^2$, equation (10), has the form:

$$IVX = ((MXIS - (MXI*MXI)/NMM)*IVARF/NMM$$

where:

$$IVX = \sigma^2{}_X$$

$$MXIS = \sum_{J=1}^{N_M} \Delta X_j^2$$

$$MXI = \sum_{J=1}^{N_M} \Delta X_j \qquad (II)$$

$$NMM = N_M$$

$$IVARF = S_\sigma$$

Tables 7(b) and 7(d) show the variance computations for the (S4,F4) and (S4,F2) minutia pairs respectively. In these computations, $S_\sigma = 4$ and $S_\theta = 22.5$. The integer scaled values of $\sigma^2$ are indicated by $\sigma_S^2$.

Having computed the variance in the neighborhood fit of minutia, the individual minutia score $S_{Mi}$ is determined from a two-dimensional scoring table. An example of such a scoring table is shown in Table 7(e). One dimension of the table is $N_M$, the number of matching neighbors, and the other is $\sigma_S^2$, the combined, scaled variance of the fit. The individual minutia score for the (S4,F4) minutia pair of 0 because $\sigma_S^2$ is greater than 14, the largest $\sigma_S^2$ entry of the table, while the individual minutia score for the S4,F2 minutia pair is 60 (the fourth row and fourth column entry of Table 7(e)). A careful examination of the minutia patterns of Table 5 shows that the (S4, F2) pairing gives a much better fit for the neighboring minutiae as the $\sigma_S^2$ computation for this pairing indicates.

Table 9 is the scoring table used in the preferred embodiment. The table is treated in the computer program as a one-dimensional table for purposes of speed and the indices to the table are computed using the specified minimum and maximum values for $M_{M_2}$ and $\sigma_S^2$. This procedure, in effect, specifies a score for all of $N_M$, $\sigma_S$ space but it does not require an infinite table of scoring values. Thus, using FORTRAN type notation,

$$\text{If } N_M > N_{MX}, N_M = N_{MX}$$

$$\text{If } N_M < N_{MN}, S_M = 0$$

$$\text{If } \sigma_S^2 > \sigma_{SX}^2, S_M = 0 \tag{12}$$

$$\text{If } \sigma_X^2 < \sigma_{SN}^2, \sigma_S^2 = \sigma_{SN}^2$$

where $N_{MX}$, $N_{MN}$, $\sigma_{SX}^2$, and $\sigma_{SN}^2$ are the maximum and minimum allowed values of $N_M$ and $\sigma_S^2$ respectively. In Table 9 $N_{MX} = 12$, $N_{MN} = 4$, $\sigma_{SX}^2 = 30$, and $\sigma_{SN}^2 = 1$. Table 9 was developed by intuitive and empirical means so as to give a high score when the search and file fingerprints are similar, and a low score when they are dissimilar.

When the score $S_{Mij}$, for a given search minutia-file minutia pair (as listed in the initial HIT list), has been determined from its relationship to its closest neighbors, this score is entered in the initial HIT list in place of the distance measure initially computed for this minutia pair. This procedure is repeated until scores have been determined for all minutia pairs defined by the initial HIT list. Table 10(a) is the HIT list for Table 6 with the distance measure replaced by the individual minutia scores. In order to avoid considerable hand computations to provide this example, all of the $S_{Mij}$ entries except for the $S_{M44}$ entries are rough approximations, but are sufficiently representative to illustrate the essential features of the process.

### 5.3 DETERMINATION OF FINAL HIT LIST AND INDIVIDUAL MINUTIA SCORE

When all of the score entries have been made in the initial HIT list, the file minutia entries for each row are re-ordered to be in decending order based on the score entries, and only the first two entries are retained in the HIT list. The right-most column of the example HIT list of Table 10(a) shows the effect of this or-ordering and truncation.

Using the tuncated, score-ordered HIT list, multiple file minutiae are eliminated by selecting that pairing which maximizes the total score when minutia pairings are considered two at a time. The selection process for the example of Table 10 is straightforward- in the right-most column of Table 10(a), the file minutia with the lowest score is always eliminated if multiple entries exist. Those file minutiae to be eliminated are indicated by a star (*) in this table.

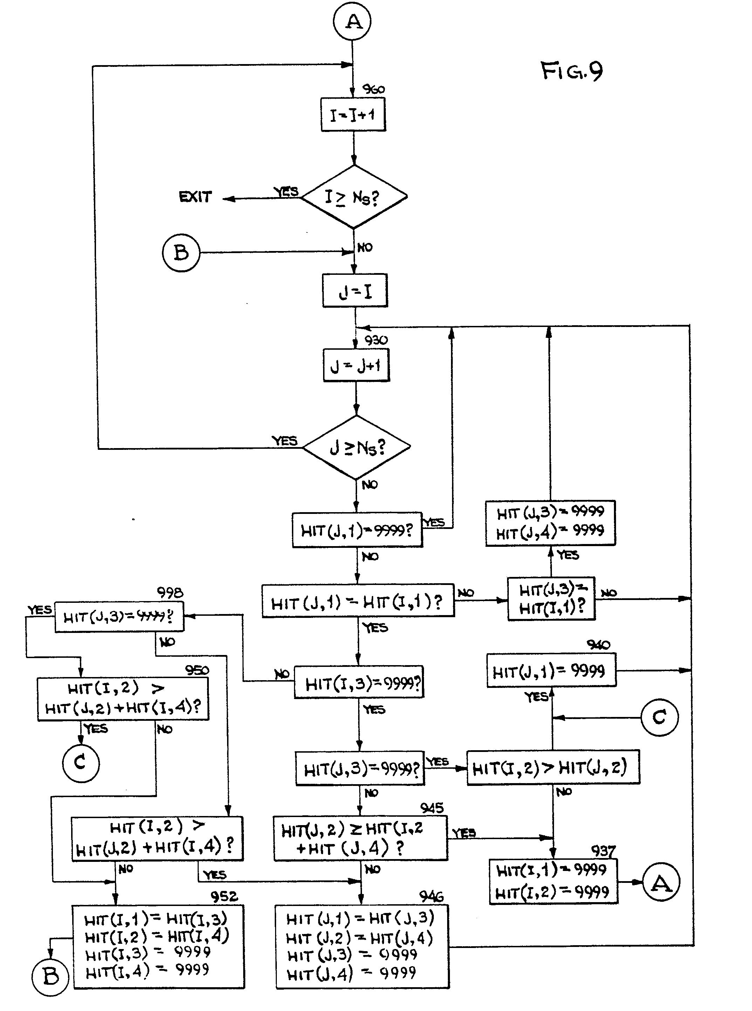

A situation not quite so straightforward is shown in Table 11. If the lowest scoring file minutiae are eliminated, there is no mating file minutia for search minutiae S2, S4, S7, and S8. The selection logic considers the pairing for two search minutiae at a time and is such that the combined score for the two minutia pairing is maximized. Figure 9 contains a flow chart of the process. In Figure 9:

NS = number of search minutia
HIT(i,1) = file minutia number with largest score on ith row of HIT array
HIT(i,2) = score for file minutia of H(i,1)
HIT(i,3) = file minutia number with second highest score on ith row of HIT array
HIT(i,4) = score for file minutia of H(i,3)
A HIT entry of 999 indicates an empty cell or no minutia pairing.

The result of the application of the process shown in Figure 9 to the example of Table 11 is shown in the right-most column of Table 11. The logic is not sufficiently complex to truly maximize the score over all possible pairing combinations. In the example of Table 11, the score would be five points higher if file minutia F9 were paired with search minutia S3 instead of S4 as shown. Such situations requiring more complex logic, however, seem to be very rare, and hence the added logic complexity that would be needed to handle such situations is not included as part of the match procedure.

### 6.0 FINAL MATCH SCORE

The final match score for the entire print is simply the sum of the match scores for each individual search minutia, as determined from the final HIT list. This is illustrated at the bottom part of Table 10(b).

The invention is mechanized by means of a FORTRAN routine run on any suitable computer system such as the IBM 7090. Appendix I contains a FORTRAN listing of the computer program. Appendix II contains a list of the more significant program variables.

**0 050 842**

TABLE 1

| MINUTIA NO. | | MINUTIA COORDINATES | |
|---|---|---|---|
| NO. | X | Y | θ |
| 1 | 103 | 13 | 2 |
| 2 | 18 | 21 | 8 |
| 3 | 51 | 93 | 40 |
| 4 | 8 | 29 | 45 |
| 5 | 30 | 40 | 90 |
| 6 | 90 | 79 | 130 |
| 7 | 117 | 43 | 135 |
| 8 | 116 | 87 | 135 |
| 9 | 90 | 50 | 150 |
| 10 | 55 | 30 | 165 |
| 11 | 120 | 24 | 172 |
| 12 | 86 | 21 | 174 |
| 13 | 72 | 98 | 182 |
| 14 | 101 | 111 | 184 |
| 15 | 47 | 16 | 187 |
| 16 | 42 | 99 | 220 |
| 17 | 23 | 72 | 250 |
| 18 | 60 | 70 | 295 |
| 19 | 43 | 52 | 305 |
| 20 | 70 | 80 | 318 |

a) SEARCH MINUTIA

| MINUTIA NO. | | MINUTIA COORDINATES | |
|---|---|---|---|
| NO. | X | Y | θ |
| 1 | 41 | 118 | 40 |
| 2 | 34 | 93 | 62 |
| 3 | 20 | 18 | 67 |
| 4 | 34 | 36 | 118 |
| 5 | 75 | 95 | 148 |
| 6 | 112 | 72 | 170 |
| 7 | 88 | 69 | 175 |
| 8 | 78 | 48 | 181 |
| 9 | 94 | 40 | 185 |
| 10 | 61 | 36 | 193 |
| 11 | 73 | 129 | 212 |
| 12 | 23 | 95 | 250 |
| 13 | 18 | 63 | 275 |
| 14 | 33 | 74 | 284 |
| 15 | 46 | 54 | 320 |
| 16 | 95 | 91 | 331 |
| 17 | 58 | 89 | 344 |

b) FILE MINUTIA

TABLE 2

LIST OF BASIC STEPS IN PROCESS

1.0 PREPARE SEARCH MINUTIA DATA
    1.1 SORT INTO ANGLE ORDER
    1.2 FIND CLOSEST NEIGHBORS
    1.3 ROTATE SEARCH MINUTIA FOR EACH ANGULAR POSITION

2.0 PREPARED FILE MINUTIA DATA
    2.1 SORT INTO ANGLE ORDER
    2.2 FIND MIN AND MAX X AND Y VALUES
    2.3 COMPUTE QUANTIZATION PARAMETERS

3.0 PRINT REGISTRATION (FIND BEST ANGLE ORIENTATION AND X, Y OFFSETS FOR LINING UP SEARCH AND FILE MINUTIA PATTERNS)
    3.1 FOR EACH ANGULAR ROTATION BUILD A TWO DIMENSIONAL HISTOGRAM OF X, Y TRANSLATIONS TO OVERPLAY ALL POSSIBLE MINUTIA PAIRS
    3.2 DETERMINE X, Y TRANSLATIONS CORRESPONDING TO MAXIMUM HISTOGRAM
    3.3 DETERMINE ROTATION ANGLE FOR MAXIMUM OF ALL HISTOGRAMS
    3.4 DETERMINE MAXIMUM VALUE OF ALL HISTOGRAMS, $M°_m$

4.0 TEST FOR EARLY OUT
    4.1 COMPARE $M°_m$ WITH THRESHOLD, $E_T$
    4.2 IF $M°_m < E_T$, ASSIGN ZERO MATCH SCORE, EXIT
    4.3 IF $M°_m > E_T$, PROCEED

5.0 "ROTATE, TRANSLATE" SEARCH MINUTIA TO BEST MATCH POSITION, DETERMINE WHICH SEARCH MINUTIA MATE WITH WHICH FILE MINUTIA

6.0 FOR EACH SEARCH MINUTIA WHICH HAS A MATING FILE MINUTIA TRANSLATE SEARCH MINUTIA SO THESE MATING MINUTIA COINCIDE COUNT HOW MANY OF $N_N$ CLOSEST NEIGHBORING SEARCH MINUTIA ALSO HAVE A MATING FILE MINUTIA, $N_m$ COMPUTE THE INDIVIDUAL MINUTIA SCORE, $I_{SI}$, $ASI_{SI} = N_M^2$

    6.1 FORM INITIAL "HIT" LIST
    6.2 FORM NEIGHBORHOOD HIT ("N HIT") LIST
    6.3 DETERMINE FINAL HIT LIST AND INDIVIDUAL MINUTIA SCORE

7.0 COMPUTE TOTAL FINAL MATCH SCORE $S_M$, $ASS_M = \sum\limits_{i=1}^{N_S} I_{SI}$

TABLE 3

| MINUTIA NO. | 8 NEAREST NEIGHBORS |
| --- | --- |
| 1 | 11, 12, 7, 9, 15, 10, 6, 8 |
| 2 | 4, 5, 15, 10, 17, 19, 18, 12 |
| 3 | 16, 13, 20, 18, 6, 19, 17, 14 |
| 4 | 2, 5, 15, 10, 17, 19, 18, 12 |
| 5 | 4, 2, 17, 19, 10, 15, 18, 9 |
| 6 | 20, 13, 8, 14, 9, 18, 3, 7 |
| . | |
| . | |
| . | |

TABLE 4

| | F1 (−5,25) | F2 (20,10) | F3 (−5,0) | F4 (3,−5) | F5 (−20,−10) | F6 (−5,−15) | F7 (−25,5) | F8 (−28,5) | F9 (−20,−25) | F10 (5,−25) | F11 (27,−10) |
|---|---|---|---|---|---|---|---|---|---|---|---|
| S1 (7,10) | 14,−15 | −11,0 | 14,10 | 6,15 | L | 14,25 | A | A | A | A | A |
| S2 (17,5) | 24,−20 | −1,−5 | 24,5 | 12,10 | L | 24,20 | A | A | A | A | A |
| S3 (−8,0) | −5,−25 | −26,−10 | −1,0 | −9,+5 | 14,10 | −1,15 | A | A | A | A | A |
| S4 (7,−5) | L | −11,15 | 14,−5 | 6,0 | L | 14,10 | A | A | A | A | A |
| S5 (−18,5) | A | A | A | A | A | A | 9,0 | 12,10 | A | A | A |
| S6 (−13,18) | A | A | A | A | A | A | 14,13 | 17,23 | A | A | A |
| S7 (−8,−13) | A | A | A | A | A | A | A | A | 14,12 | −11,12 | L |
| S8 (17,−15) | A | A | A | A | A | A | A | A | L | 14,10 | −8,−3 |

## TABLE 5

SEARCH MINUTIA

| NO. | X | Y | θ |
|-----|-----|-----|-----|
| 1 | 8 | 8 | 25 |
| 2 | 14 | 21 | 27 |
| 3 | 10 | 20 | 30 |
| 4 | 6 | 17 | 32 |
| 5 | 36 | 10 | 150 |
| 6 | 31 | 8 | 155 |
| 7 | 26 | 14 | 160 |
| 8 | 14 | 14 | 235 |
| 9 | 28 | 22 | 325 |
| 10 | 32 | 22 | 330 |
| 11 | 39 | 22 | 340 |

FILE MINUTIA

| NO. | X | Y | θ |
|-----|-----|-----|-----|
| 1 | 18 | 23 | 25 |
| 2 | 10 | 19 | 25 |
| 3 | 14 | 22 | 28 |
| 4 | 5 | 14 | 30 |
| 5 | 8 | 9 | 30 |
| 6 | 12 | 10 | 32 |
| 7 | 28 | 16 | 150 |
| 8 | 24 | 12 | 160 |
| 9 | 39 | 12 | 160 |
| 10 | 35 | 9 | 162 |
| 11 | 27 | 8 | 170 |
| 12 | 12 | 15 | 210 |
| 13 | 18 | 15 | 230 |
| 14 | 32 | 24 | 320 |
| 15 | 36 | 23 | 332 |
| 16 | 25 | 22 | 342 |

## TABLE 6

HIT LIST

| SEARCH MINUTIA | CORRESPONDING FILE MINUTIA, DISTANCE |
|-----|-----|
| S1 | (F5,2), (F6,8), (F4, 10) |
| S2 | (F3,1), (F1,6), (F2,6) |
| S3 | (F2,2), (F3,6), (F4,11), (F1,12) |
| S4 | (F4,4), (F2,8), (F5,10), (F3,14) |
| S5 | (F10,3) (F9,7) |
| S6 | (F11,6), (F10,6) |
| S7 | (F8,4), (F7,6), (F11,9) |
| S8 | (F13,6), (F12,8) |
| S9 | (F16,6), (F14,7), (F15,10) |
| S10 | (F14,4), (F15,5), (F16,9) |
| S11 | (F15,5), (F14,13) |

TABLE 7(a)—7(e)

INITIAL NHIT LIST, (S4,F4) PAIRING

| DISPLACED SEARCH MINUTIA | CORRESPONDING FILE MINUTIA DISTANCE |
|---|---|
| S2 | (F2,2), (F5,9) |
| S3 | (F2,5), (F3,6) |
| S8 | (F12,7), (F13,9) |
| S1 | (F5,6), (F6,11) |

(a)

FINAL NHIT LIST, (S4,F4) PAIRING

| SEARCH MINUTIA | FILE MINUTIA | $\Delta X$ | $\Delta Y$ | $\Delta\theta$ |
|---|---|---|---|---|
| S3 | F2 | 1 | 2 | −5 |
| S2 | F3 | 1 | 4 | 1 |
| S8 | F12 | −1 | 4 | −25 |
| S1 | F5 | 1 | 4 | 5 |
| | $\sigma^2$ | 0.75 | 0.75 | 133 |

$\sigma_s^2 = 4(0.75) + 4(0.75) + 4(133)/22.5$
$= 30$
$^sM44 = 0$

(b)

INITIAL NHIT LIST, (S4,F2) PAIRING

| DISPLACED SEARCH MINUTIA | CORRESPONDING FILE MINUTIA DISTANCE |
|---|---|
| S3 | (F23,1), (F1,6) |
| S2 | (F1,0), (F3,5) |
| S8 | (F13,2), (F12,10) |
| S1 | (F6,2), (F5,6) |

(c)

FINAL NHIT LIST, (S4,F2) PAIRING

| SEARCH MINUTIA | FILE MINUTIA | $\Delta X$ | $\Delta Y$ | $\Delta\theta$ |
|---|---|---|---|---|
| S3 | F3 | 0 | 0 | −2 |
| S2 | F1 | 0 | 0 | −2 |
| S8 | F13 | 0 | −1 | −5 |
| S1 | F6 | 0 | 0 | 7 |
| | $\sigma^2$ | 0 | 0.19 | 20 |

$\sigma_s^2 = 4(0) + 4(0.19) + 4(20)/22.5$
$= 4$
$^sM42 = 60$

(b)

EXAMPLE SCORING TABLE

| N \ $\sigma_s^2$ | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| 2 | 20 | 10 | 5 | 1 | 0 | 0 | 0 | 0 | 0 | 0 | 0 | 0 | 0 | 0 | 0 |
| 3 | 40 | 20 | 10 | 5 | 3 | 1 | 0 | 0 | 0 | 0 | 0 | 0 | 0 | 0 | 0 |
| 4 | 150 | 120 | 100 | 80 | 60 | 40 | 20 | 10 | 5 | 3 | 1 | 0 | 0 | 0 | 0 |
| 5 | 200 | 150 | 120 | 100 | 80 | 80 | 40 | 20 | 10 | 5 | 3 | 1 | 0 | 0 | 0 |
| 6 | 200 | 200 | 200 | 150 | 120 | 100 | 80 | 60 | 40 | 20 | 10 | 5 | 3 | 1 | 0 |

(e)

TABLE 8

| DISPLACED SEARCH MINUTIA | CORRESPONDING FILE MINUTIA, DISTANCE | FINAL PAIRING |
|---|---|---|
| S1 | (F2,5)— | (F2,5) |
| S2 | (F2,2), (F7,5) | (F7,5) |
| S3 | (F8,2)— | (F8,2) |
| S4 | (F8,4), (F9,6) | (F9,6) |
| S5 | (F10,3), (F11,5) | (F10,3) |
| S6 | (F12,3), F14,5) | F(14,5) |
| S7 | (F14,7)— | — |
| S8 | F(12,1)— | F(12,1) |

TABLE 9

| $\sigma_S^2$ \ $N_M$ | 4 | 5 | 6 | 7 | 8 | 9 | 10 | 11 | 12 |
|---|---|---|---|---|---|---|---|---|---|
| 1 | 50 | 100 | 120 | 150 | 170 | 200 | 220 | 250 | 250 |
| 2 | 30 | 60 | 100 | 120 | 150 | 180 | 200 | 220 | 250 |
| 3 | 20 | 40 | 70 | 110 | 140 | 150 | 180 | 210 | 240 |
| 4 | 10 | 20 | 60 | 100 | 120 | 140 | 160 | 200 | 220 |
| 5 | 8 | 16 | 40 | 70 | 100 | 110 | 150 | 190 | 200 |
| 6 | 5 | 10 | 20 | 40 | 80 | 100 | 130 | 170 | 200 |
| 7 | 3 | 8 | 16 | 32 | 64 | 90 | 110 | 160 | 180 |
| 8 | 2 | 6 | 12 | 24 | 48 | 80 | 100 | 150 | 170 |
| 9 | 1 | 5 | 10 | 20 | 40 | 70 | 100 | 140 | 160 |
| 10 | 0 | 3 | 6 | 12 | 24 | 50 | 90 | 130 | 150 |
| 11 | 0 | 2 | 5 | 10 | 20 | 40 | 80 | 120 | 150 |
| 12 | 0 | 1 | 5 | 10 | 20 | 40 | 80 | 110 | 140 |
| 13 | 0 | 0 | 4 | 8 | 16 | 32 | 64 | 100 | 120 |
| 14 | 0 | 0 | 3 | 6 | 12 | 24 | 48 | 100 | 120 |
| 15 | 0 | 0 | 2 | 4 | 8 | 16 | 32 | 70 | 100 |
| 16 | 0 | 0 | 1 | 3 | 6 | 12 | 24 | 50 | 90 |
| 17 | 0 | 0 | 0 | 2 | 4 | 8 | 16 | 40 | 80 |
| 18 | 0 | 0 | 0 | 1 | 3 | 6 | 12 | 30 | 70 |
| 19 | 0 | 0 | 0 | 0 | 2 | 4 | 8 | 20 | 60 |
| 20 | 0 | 0 | 0 | 0 | 1 | 3 | 6 | 10 | 40 |
| 21 | 0 | 0 | 0 | 0 | 0 | 2 | 4 | 8 | 30 |
| 22 | 0 | 0 | 0 | 0 | 0 | 1 | 3 | 6 | 20 |
| 23 | 0 | 0 | 0 | 0 | 0 | 0 | 2 | 4 | 10 |
| 24 | 0 | 0 | 0 | 0 | 0 | 0 | 1 | 3 | 8 |
| 25 | 0 | 0 | 0 | 0 | 0 | 0 | 0 | 2 | 6 |
| 26 | 0 | 0 | 0 | 0 | 0 | 0 | 0 | 1 | 4 |
| 27 | 0 | 0 | 0 | 0 | 0 | 0 | 0 | 0 | 3 |
| 28 | 0 | 0 | 0 | 0 | 0 | 0 | 0 | 0 | 2 |
| 29 | 0 | 0 | 0 | 0 | 0 | 0 | 0 | 0 | 1 |
| 30 | 0 | 0 | 0 | 0 | 0 | 0 | 0 | 0 | 0 |

# 0 050 842

TABLE 10

| SEARCH MINUTIA | CORRESPONDING FILE MINUTIA INDIVIDUAL MINUTIA SCORES | CORRESPONDING FILE MINUTIA AFTER SCORE ORDERING AND TRUNCATION |
|---|---|---|
| S1 | (F5,3), (F6,100) (F4,0) | (FG,100), (F5.3) |
| S2 | (F3,10), (F1,80), (F2,1) | (F1.80), (F3,10)* |
| S3 | (F2,3), (F3,100), (F4,0), (F1,0) | (F3,100), (F2,3)* |
| S4 | (F4,0), (F2,60), (F5,0), (F3,0) | (F2,60), (4,0) |
| S5 | (F10,10), (F9,20) | (F9,20), (F10,10)* |
| S6 | (F11,20), (F10,80) | (F10,80), F11,20) |
| S7 | (F8.3), (F7.60), (F11,0) | (F7,60), (F8,3) |
| S8 | (F13,100), (F12,3) | (F13,100), (F12,3) |
| S9 | (F16,3), (F14,40), (F15,0) | (F14.40), (F16,3) |
| S10 | (F14,5), (F15,60), (F16,0) | (F15,60), (F14,5)* |
| S11 | (F15,3), (F14,10) | (F14,10)*, (F15,3)* |

\* ELIMINATED MINUTIA

(a) INTERMEDIATE HIT LIST

| SEARCH MINUTIA | SELECTED FILE MINUTIA AND SCORE |
|---|---|
| S1 | (F6,100) |
| S2 | (F1,80) |
| S3 | (F3,100) |
| S4 | (F2,60) |
| S5 | (F9,20) |
| S6 | (F10,80) |
| S7 | (F7,60) |
| S8 | (F13,100) |
| S9 | (F14,40) |
| S10 | (F15,60) |
| S11 | |

MATCH SCORE = 100 + 80 + 100 + 60 + 20 + 80 + 60 + 100 + 40 + 60
= 700

(b) FINAL HIT LIST

15

**0 050 842**

TABLE 11

| SEARCH MINUTIA | CORRESPONDING FILE MINUTIA AFTER SCORE ORDERING AND TRUNCATION | FINAL PAIRING AND SCORE |
|---|---|---|
| S1 | (F3,40)*, (F7,35) | (F7,35) |
| S2 | (F3,20) | (F3,20) |
| S3 | (F9,20)*, (F11,10)* | — |
| S4 | (F9,15) | (F9,15) |
| S5 | (F11,50) | (F11,50) |
| S6 | (F15,60), F(18,30) | (F15,60) |
| S7 | (F15,10)* | — |
| S8 | (F15,5)* | — |
| S9 | (F21,30), (F23,15) | (F21,30) |
| S10 | (F21,25)*, (F26,20) | (F26,20) |
| S11 | (F31,30)*, (F32,20) | (F32,20) |
| S12 | (F31,20), (F33,5) | (F31,20) |

* ELIMINATED MINUTIA

APPENDIX I

ECLIPSE FORTRAN 5, VERSION 4.00

```
      SUBROUTINE MATCHP
      OVERLAY OVMAT
C
C     RaO MATCH PROGRAM (MATCHP); CALLS ASORT    DATA GENERAL 11/78
C
      PARAMETER ID1=204, ID4=204, ID3=204, ID5=20, ID6=12
      COMPILER STATIC
      COMMON/ARRAY/ F,COUNT,SCORET,IXMIN,IXMAX,IYMIN,IYMAX
      COMMON /PLOTAG/PA,IJS,XOFS, YOFS,IPAAR, PAA, AVX, AVY
      COMMON /ARGS/ LATID,ISCDA,NP,P,IFCDA,NF,ISCOR,IFLAG,PCN
      COMMON /MATGP/ IPAR
      INTEGER P(3*1D4),COUNT(2500), F(3*ID3), PA(ID5*ID4),NBR(ID6*ID4)
     * ,SUMX,SUMY,AVX,AVY,SDIV(32),CDIV(32),NBRS(33),SCORET(16,10)
     * ,RIV(23),NPOS(5),NMAX(5),MIT(ID4),PAA(ID4),S(ID5),S5(ID5),NHIT(ID4)
     * ,NP,NF,ISCOR,ISCOA(24),IFCDA(16),IPAR(256),ISCTVR(500)
     * ,XOF,YOF,DPX,DPY,PX,PXS,PYS,PCN(9),LATID(7)
     * ,DELTH,DELX,DX,ERAA,ERAM,DDX,XDFS,YOFS,PXLX,PYLY,ISTAB(512)
     * ,ASFP,ERAB,ASFN,ASFS
      EQUIVALENCE (ISTAB(21), ISVTVR(1)), (COUNT(750), HIT(1))
     * , (COUNT(630), NMIT(1)), (S(1),PA(1)), (COUNT(1),SS(1))
     * , (IPAR(26),IEOT), (IPAR(2B),MXNBL), (ITAR(29),NAT)
     * , (IPAR(30),ERAA), (IPAR(31),ERAM), (IPAR(32),DELX), (IPAR(33),DX)
     * , (IPAR(34),NXMAX), (IPAR(35),NYMAX), (IPAR(36),IETP), (IPAR(37), IFTPN)
     * , (IPAR(38),DDX), (IPAR(44),IOFLAG), (IPAR(61)ASFP), (IPAR(62), ERAB)
     * , (IPAR(63),ASFN), (IPAR(64),ASFS), (IPAR(135), JSMIN), (IPAR(136),IVARF)
     * , (IPAR(137),IVARMX), (IPAR(138),JSMX), (IPAR(139), IVARMN)
C
      DATA SDIV/-32,-32,-33,-34,-35,-37,-40,-43,-48,-54,-62,-75,-95,
     * -132,-218,-652,652,218,132,95,75,62,54,48,43,40,37,35,34,33,32,32/
      DATA CDIV/34,38,42,48,56,66,79,97,124,163,225,333,547,1068,2957,26556,
     *26556,2957,1068,547,333,225,163,124,97,79,66,56,48,42,38,34/
C
C**   PREPARE LATENT DATA
C
      DELTH = 4
      IF(NAT .GT. 32) NAT = 32
      NPK = NP+NP+4
      IF(NAT*NPK .GT. ID5*ID4) NAT = ID5*ID4/NPK
      IF (IFLAG.EQ.1) GO TO 65
C
C         OPEN AND READ FILE CONTAINING SCORING TABLE DATA
C
      OPEN 0,"R40STB",ERR=8030,ATT="C",LEN=512,REC=2
      CALL R0BLK(0,0,ISTAB,2,1ER)
      CLOSE 0
      GO TO 8030
A020  TYPE'<CR>★MATCHP★ R40STR FILE DOES NOT EXIST'
      ISCOR = 0
      RETURN
8030  CONTINUE
      NRIV = MXNBL
      IR(NRIV .GE. NP) NRIV = NP-1
C
C         SORT INTO ANGLE ORDER
C
      IRA = ERAA + DELTH ★ NAT/2
      CALL ASORT(IRA,NP,MPT,P)
C
```

```
59: C        COMPUTE AVERAGE X AND Y
60: C
61:          NP3 = NP*3
62:          NPCO = NP3
63:          SUMX = 0
64:          SUMY = 0
65:          DO 15 I = 1,NP3,3
66:          SUMX = SUMX + S(I)
67:    15    SUMY = SUMY + S(I+1)
68:          AVX = SUMX/NP
69:          AVY = SUMY/NP
70: C
71: C        CENTER LATENT AROUND ORIGIN
72: C
73:          O 25 I = 1,NPCD,3
74: SS(I) = S(I) - AVX
75:          SS(I+1) = S(I+1) - AVY
76:    25    SS(I+2) = S(I+2)
77: C
78: C        FIND CLOSEST NEIGHBORS
79: C
80:          NRIVS = NRIV+1
81:          NN = NP * 3
82:          IT=0
83:          DO 800 I = 1,NN,3
84:          DO 380 L = 1,NRIVS
85:          NARS(L) = 0
86: 380      RIV(L) = 32767
87:          PX = SS(I)
88:          PY = SS(I+1)
89:          00 750 J = 1,NN,3
90:          1DX = IABS:PX-SS(J))
91:          1DY = IABS(PY-SS(J+1))
92:          IR = IDX + IDY
93:          IF(IR .GT. IPAR(19)) GO TO 750
94:          IF (IR.GT.RIV(1)) GOT TO 750
95:          DO 620 K = 2,NRIVS
96:          IF (IR.GT.RIV(K)) GO TO 650
97:          RIV(K-1) = RIV(K)
98: 620      NBRS(K-1) = NBRS(K)
99:          K = NRIVS+ 1
100: 650     RIV(K-1) = IR
101:         NBRS(K-1) = J/3 +1
102: 750     CONTINUE
103:         IEND = NRIV
104: 760     ITMP = 0
105:         00 770 L=2,IEND
106:         IF(NBRS( L).GT.NBRS( L-1)) GO TO 770
107:         ITMP = NBRS(L)
108:         NBRS( L) = NBRS( L-1)
109:         NBRS( L-1) = ITMP
110: 770     CONTINUE
111:         IF (ITMP.EO.0) GO TO 799
112:         IEND = IEND - 1
113:         IF (IEND.GT.1) GO TO 760
114: 799     DO 780 L=1,NRIV
115:         IT = IT + 1
116: 780     NBR(IT) = NBRS(L)
117: 800     CONTINUE
118: C
119: C        ROTATE LATENT FOR EACH ANGULAR POSITION
120: C
121:         NPS = NP+NP
122:         NP2CD = NP2
```

```
123:        JA = (32-NAT)/2 +1
124:        JB = (32+NAT)/2
125:        KM = -1
126:        DO 30 L =1,NPCD,3
127:        KM = KM + 2
128:        PX = SS(L)
129:        PXS = 32*PX
130:        PY = SS(L+1)
131:        PYS = 32*PY
132:        KK = KM
133:        DO 40 N=JA,JB
134:        PA(KK) = PX -(PXS/CDIV(N))-(PYS/SDIV(N))
135:        PA(KK+1) = (PXS/SDIV(N)) + PY - (PYS/CDIV(N))
136:   40   KK = KK + NP2CD
137:   30   CONTINUE
138:        KKX = KK
139:        JF = -SS(3)
140:        IF(JF .LT. 0) JF = 0
141:        LAMIN = JF+(NAT/2)*DELTH - DELTH/2
142:        K = 0
143:        DO 90 I = 1,NP
144:        K = K+3
145:   90   PAA(I) = SS(K) + JF
146:        IFLAG = 1
147:   65   CONTINUE
148: C
149: C**    PREPARE FILE DATA
150: C
151:        NF3 = NF*3
152: C
153: C      COMPUTE QUANTIZATION PARAMETERS
154: C
155:        NX = MINO((IXMAX-IXMIN)/DELX,NXMAX)
156:        IF(NX.EO.O) NX=1
157:        NY = MIN0(IYMAX - IYMIN)/DELX,NYMAX)
158:        IF(NY.EO.0) NY=1
159:        ICXF = (IXMAX+IXMIN)/2
160:        ICYF = (IYMAX + IYMIN)/2
161:        JFXMIN = ICXF - DELX*NX/2
162:        JFYMIN = ICYF - DELX*NY/2
163:        NX1 = NX+2
164:        NY1 = NY+2
165:        NXT1 = NX1*NY1
166:        LX = NX*DELX/2
167:        LY = NY*DELX/2
168:        NP8 = 8*NP
169:        NB4 = NRIV*4
170: C
171: C      START OF BASIC MATCH ALGORITHM
172: C
173: C      FIRST, FIND THE BEST X,Y OFFSETS AND ANGLE ORIENTATIONS FOR
174: C      CENTERING THE LATENT PRINT OVER THE FILE PRINT
175: C
176: C      COMPUTE SEARCH POSITION LIMITS
177: C
178:        DO 3 I = 1,NXT1
179:   3    COUNT(I) = 0
180:        IANS = 2
181:        MMAX = 0
182:        II = -1-NP2CD
183:        IANGM = -DELTH
184: C
```

```
185: C          COUNT HITS FOR EACH ANGULAR POSITION
186: C
187:            DO 500 NANGLE = 1,NAT
188:            IANGM = IANGM + DELTH
189:            NJ = 1
190:            II = II + NP2CD
191: IABIAS = −256−LAMIN+IANGM
192:            DO 300 IBA = 1,2
193:            IABIAS = IABIAS + 256
194:            IJ = II
195:            DO 300 I = 1,NP
196:            IJ = IJ + 2
197            PX = PA(IJ) + ICXF
198:            PY = PA(IJ+1) + ICYF
199:            PXLX = PX − LX
200:            PYLY = PY − LY
201:            IANG = PAA(I) + IABIAS
202:            N = NJ
203:            DO 275 J = N,NF3,3
204:            IF (IABS(F(J+2) −IANG).GT.ERAA) GO TO 260
205:            IF(IABS(F(J)−PX) .GE. LX) GO TO 275
206:            IF(IABS(F(J+1)−PY) .GE. LY) GO TO 275
207:            KST = ((F(J)=PXLX)/DELX)★NY1 + (F(J+1)−PYLY)/DELX + 1
208:            COUNT(KST) = COUNT(KST) + 1
209:            COUNT(KST+NY1) = COUNT(KST+NY1) + 1
210:            KST = KST + 1
211:            COUNT(KST) = COUNT(KST) + 1
212:            COUNT(KST+NY1) = COUNT(KST+NY1) + 1
213:            GO TO 275
214: 260       IF (F(J+2).GT.IANG)GO TO 300
215:            NJ = J
216: 275       CONTINUE
217: 300       CONTINUE
218: C
219: C          FIND COORDINATES OF MAXIMUM HIT COUNT
220: C
221:            DO 400 I = 1,NXT1
222:            NSS = COUNT(I)
223:            COUNT(I) = 0
224:            IF (NSS.LT.IANS) GO TO 400
225:            IF (NSS.EQ.IANS) GO TO 399
226:            MMAX=1
227:            IANS = NSS
228:            NPOS(MMAX) = I
229:            NMAX(MMAX) = NANGLE
230:            GO TO 400
231: 399       MMAX = MMAX + 1
232:            IF (MMAX.GT.5) MMAX = 5
233:            NPOS (MMAX) = I
234:            NMAX(MMAX) = NANGLE
235: 400       CONTINUE
236: 500       CONTINUE
237: C
238: C          SECOND, MOVE THE LATENT PRINT AND FIND WHICH OF THE LATENT
239: C             MINUTIAE MATCH AND RECORD THIS IN THE HIT ARRAY.
240: C
241:            ISCORS = 0
242:            IF(IANS .LT. IEOT) GO TO 992
243:            DO 990 JZ = 1,MMAX
244: C
245: C          FIND THE POSITION OFFSETS
246: C
247:            IN = NPOS(JZ)/NY1
248:            JN = NPOS(JZ) − NY1★IN − 1
```

```
249:        IF (JN.GT.0) GO TO 601
250:        JN = NY
251:        IN = IN − 1
252: 601    CONTINUE
253:        NMAZ = NMAX(JZ)
254:        IJ = NP2CD★(NMAZ−1)
255:        XOF = IN ★ DELX + JFXMIN
256:        YOF = JN ★ DELX + JFYMIN
257:        DO 122 I = 1,NP8
258: 122    HIT(I) = 9999
259:        NJ = 1
260:        NANG = (NMAZ−1)★DELTH
261:        IABIAS = −256 − LAMIN + NANG
262:        DO 290 IBA = 1,2
263:        IABIAS = IABIAS + 256
264:        DO 290 I = 1,NP
265:        IH = 8★I−7
266: 278    K = IJ + I + I −1
267: C
268: C      TRANSLATE LATENT TO NEW POSITION
269: C
270:        PX = PA(K) + XOF
271:        PY = PA(K+1) + YOF
272:        IANG = PAA(I) + IABIAS
273:        N = NJ
274:        IF(N.GE. NF3) GO TO 292
275: C
276: C      IDENTIFY HITS
277: C
278:        DO 280 J = N,NF3,3
279:        IEA = IABS(F)J+2) − IANG)
280:        IF(IEA .GT. ERAM) GO TO 279
281:        IEX = IABS(F(J) − PX)
282:        IF(IEX .GT. DX) GO TO 280
283:        IEY − IABS(F(J+1) − PY)
284:        IF(IEY .GT. DX) GO TO 280
285:        IET = IEA/ASFP + IEX + IEY
286:        IF(IET .GT. IETP) GO TO 280
287:        JH = 6
288:        IF(HIT(IH+JH+1) .LE. IET) GO TO 2786
289:        HIT(IH+JH+1) = IET
290:        HIT(IH+JH) = J/3 + 1
291: 2783   JH = JH−2
292:        IF(JH .LT. 0) GO TO 2786
293:        IF(HIT(IH+JH+3) .GE. HIT(IH+JH+1)) GO TO 2786
294:        IT1 = HIT(IH+JH)
295:        IT2 = HIT(IH+JH+1)
296:        HIT(IH+JH) = HIT(IH+JH+2)
297:        HIT(IH+JH+1) = HIT(IH+JH+3)
298:        HIT(IH+JH+2) = IT1
299:        HIT(IH+JH+3) = IT2
300:        GO TO 2783
301: 2786   CONTINUE
302:        GO TO 280
303: 279    IF (F(J+2).GT.IANG) GO TO 290
304:        NJ = J
305: 280    CONTINUE
306: 290    CONTINUE
307: 292    CONTINUE
308: C
309: C      THIRD, FOR EACH LATENT MINUTIAE WHICH IS A HIT, MOVE THE LATENT
310: C         PRINT SO THAT THE MATCHING MINUTIAE COINCIDE AND THEN TEST TO
311: C         SEE HOW MANY OF THE CLOSEST LATENT NEIGHBORS ARE ALSO A HIT.
312: C
```

21

```
313:        NBRI = -NRIV
314:        DO 898 LM = 1,NP
315:        NBRI = NBRI + NRIV
316:        DO 895 LM1 = 1,4
317:        IS = 8*(LM-1) + 2*(LM1-1) + 1
318:        IF(HIT(IS) .EQ. 9999) GO TO 898
319:        JFM = HIT(IS)
320:        JJ = (HIT(IS)-1)*3+1
321:        KK = IJ+LM+LM-1
322: C
323: C      COMPUTE OFFSETS TO OVERLAY LATENT AND FILE MINUTIAE
324: C
325:        DPX= F(JJ) - PA(KK)
326:        DPY = F(JJ+1) - PA(KK+1)
327:        NJ = 1
328:        DO 810 LL = 1,NB4
329:    810 NHIT(LL) = 0
330:        IABIAS = -256 - LAMIN + NANG
331:        DO 850 KZ = 1,2
332:        IABIAS = IABIAS + 256
333: C
334: C      FIND HITS FOR CLOSEST NEIGHBORS
335: C
336:        DO 850 K = 1,NRIV
337:        KI = NBR(NBRI+K)
338:        IF(KI .EQ. 0) GO TO 850
339:        IK = KI+KI-1+IJ
340:        PX = PA(IK) + DPX
341:        PY = PA(IK+1) + DPY
342:        IANG = PAA(KI) + IABIAS
343:        DO 845 JK=1,8,2
344:        JSP = 8*(KI-1) + JK
345:        J = IAND(HIT(JSP),377K)
346:        IF(J .EQ. 9999) GO TO 850
347:        IF (J .EQ. JFM) GO TO 845
348:        J = (J-1)*3 + 1
349:        IEA = IABS(F(J+2) - IANG)
350:        IF(IEA .G. ERAB) GO TO 845
351:        IEX = IABS(F(J) - PX)
352:        IF(IEX .GT. DDX) GO TO 845
353:        IEY = IABS(F(J+1) - PY)
354:        IF = IEY .GT. DDX GO TO 845
355:        IET = IEX+IEY+IEA/ASFN
356:        IF(IET .GT. IETPN) GO TO 845
357:        IH = 4*K - 3
358:        IF(NHIT(IH) .EQ. 0) GO TO 835
359:        IF(NHIT(IH+2) .NE. 0) GO TO 825
360:        IF(NHIT(IH+1) .LE. IET) GO TO 830
361: 820    NHIT(IH+2) = NHIT(IH)
362:        NHIT(IH+3) = NHIT(IH+1)
363:        GO TO 835
364: 825    IF(IET .GE. NHIT(IH+3)) GO TO 845
365:        IF(IET .LT. NHIT(IH+1) GO TO 820
366: 830    IH = IH+2
367: 835    NHIT(IH) = J
368:        NHIT(IH+1) = IET
369: 845    CONTINUE
370: 850    CONTINUE
371: 852    CONTINUE
372: C
373: C      ELIMINATE DUPLICATE FILE MINUTIA, SELECT BEST NEIGHBOR PAIRING
374: C
375:        DO 870 I = 1,NB4,4
376:        IF(NHIT(I) .EQ. 0) GO TO 870
377: 855    IFM = NHIT(I)
```

```
378:            J = I
379:  858       J = J+4
380:            IF(J .GT. NB4) GO TO 868
381:            IF(NHIT(J) .EQ. 0) GO TO 858
382:            IF(NHIT(J) .EQ. IFM) GO TO 860
383:            IF(NHIT(J+2) .NE. IFM) GO TO 858       ; I1 = J2, J1 .NE. 0
384:            NHIT(J+2) = 0
385:            NHIT(J+3) = 0
386:            GO TO 858
387:  860       IF(NHIT(I+2) .NE. 0) GO TO 865         ; I1 = J1
388:            IF(NHIT(J+2) .NE. 0) GO TO 864         ; I1=J1, I2 = 0
389:            IF(NHIT(I+1) .LT. NHIT(J+1)) GO TO 862 ; I1=J1, I2=0, J2=0
390:            NHIT(I) = 0                            ; I1=J1 I2=0 J2=0, SJ1 .LE. SI1
391:            NHIT(I+1) = 0
392:            GO TO 870
393:  862       NHIT(J) = 0
394:            NHIT(J+1) = 0
395:            GO TO 858
396:  864       NHIT(J) = NHIT(J+2)
397:            NHIT(J+1) = NHIT(J+3)
398:            NHIT(J+2) = 0
399:            NHIT(J+3) = 0
400:            GO TO 858
401:  865       IF(NHIT(J+2) .EQ. 0) GO TO 866         ; I1=J1,I2 .NE. 0
402:            IF(NHIT(I+1) .LE. NHIT(J+1)) GO TO 864 ; I1=J1,I2 .NE. 0, J2 .NE. 0
403:  866       NHIT(I) = NHIT(I+2)                    ; I1=J1, TS .NE. 0/J2=0 .OR. J2 .NE. 09, ST1 .GT.
404:            NHIT(I+1) = NHIT(I+3)
405:            NHIT(I+2) = 0
406:            NHIT(I+3) = 0
407:            GO TO 855
408:  868       NHIT(I+2) = 0                          ; I1 SELECTED
409:            NHIT(I+3) = 0
410:  870       CONTINUE
411: C
412: C          FIND SCORE FOR NEIGHBORS BASED ON VARIANCE OF FIT
413: C
414:            MXI = 0
415:            MYI = 0
416:            MTI = 0
417:            MXIS = 0
418:            MYIS = 0
419:            MTIS = 0
420:            IABIAS = -LAMIN+NANG
421:            NMM = 0
422:            K = 0
423:            DO 880 I = 1,N84,4
424:            K = K+1
425:            IF(NHIT(I) .EQ. 0) GO TO 880
426:            NMM = NMM + 1
427:            J = NHIT(I)
428:            KI = NBR(NBRI+K)
429:            IF(KI .EQ. 0) GO TO 880
430:            IK = KI +KI - 1 +IJ
431:            ID = PA(IK) + DPX - F(J)
432:            MXI = MXI + ID
433:            MXIS = MXIS+ID*ID
434:            ID = PA(IK+1) + DPY - F(J+1)
435:            MYI = MYI + ID
436:            MYIS = MYIS + ID*ID
437:            ID = PAA(KI) + IABIAS - F(J+2)
438:            IF(IABS(ID) .GT. 127) ID = ID + 256
```

23

```
        MTI = MTI+ID
        MTIS = MTIS + ID*ID
880     CONTINUE
        JSX = NMM - JSMIN + 1
        IF(JSX .GT. JSXMX) JSX = JSXMX
        IF(JSX. GE. 1) GO TO 885
        ITSX = 99
        ISCORV = 0
        ITSXS = 0
        GO TO 890
885     IVX = ((MXIS - (MXI*MXI)/NMM)*IVARF)/NMM
        IVY = ((MYIS - (MYI*MYI)/NMM)*IVARF)/NMM
        IVT = ((MTIS - (MTI*MTI)/NMM)*IVARF)/(NMM*ASFS*ASFS)
        ITSX = (IVX+IVY=IVT)/3
        ITSX = ITSX - IVARMN
        IF(ITSX .GT. IVARMX) ITSX = IVARMX
        IF(ITSX .LT. 1) ITSX = 1
        IXJV = (JSX-1)*IVARMX+ITSX
        ISCORV = ISCTVR(IXJV)
890     HIT(IS+1) = ISCORV
895     CONTINUE
898     CONTINUE
C
C       ORDER HIT ARRAY ENTRIES BASED ON SCORE
C
        DO 920 I = 1,NP8,8
        MX = -5
        MX2 = -10
        DO 910 J = 1,8,2
        IF(HIT(I+J) .EQ. 9999) GO TO 915
        IF(HIT(I+J) .LE. MX) GO TO 905
        MX2 = MX
        MX2N = MXN
        MX = HIT(J+I)
        MXN = HIT(J+I-1)
        GO TO 910
905     IF(HIT(J+I) .LE. MX2) GO TO 910
        MX2 = HIT(J+I)
        MX2N = HIT(J+I-1)
910     CONTINUE
915     IF(MX .LT. 0) GO TO 920
        HIT(I) = MXN
        HIT(I+1) = MX
        IF(MX2 .LT. 0) GO TO 920
        HIT(I+2) = MX2N
        HIT(I+3) = MX2
920     CONTINUE
C
C       SELECT LARGEST SCORE FROM HIT LIST MULTIPLE ENTRIES
C
        DO 960 I = 1,NP8,8
        IF(HIT(I) .EQ. 9999) GO TO 960
925     IFM = IAND(HIT(I),377K)
        J = I
930     J = J+8
        IF(J .GT. NP8) GO TO 960
        IF(HIT(J) .EQ. 9999) GO TO 930          ; I .NE. 9999, J .NE. 9999
        IF(IAND(HIT(J),377K) .EQ. IFM) GO TO 935   ; I1 .NE. J1
        IF(IAND(HIT(J+2),377K) .NE. IFM) GO TO 930 ; I1 .NE. J1, J2 = I1
        HIT(J+2) = 9999
        HIT(J+3) = 9999
        GO TO 930                               ; I1 = J1
935     IF(HIT(J+2) .NE. 9999) GO TO 948        ; I1 = J1,I2=9999
        IF(HIT(J+2) .NE. 9999) GO TO 945
```

```
503:       IF(HIT(I+1) .GT. HIT(J+1)) GO TO 940    ; I1=J1,I2=9999, J2=9999
504:  937  HIT(I) = 9999
505:       HIT(I+1) = 9999
506:       GO TO 960
507:  940  HIT(J) = 9999                           ; I1=J1, J2=9999,/I2=9999,SI1.GT.SJ1 .
509:       GO TO 930
510:  945  IF(HIT(J+1) .GE. HIT(I+1) + HIT(J+3)) GO TO 937   ; I1=J1, I2=9999,J2.NE.9999
511:  946  HIT(J) + HIT(J+2)                       ; I1=J1,J2.NE.9999,/I2=9999,SJ1.LT.SI1.
512:       HIT(J+1) = HIT(J+3)                     ; I2.NE.9999, SI1.GT.SJ1+SI2
513:       HIT(J+2) = 9999
514:       HIT(J+3) = 9999
515:       GO TO 930
516:  948  IF(HIT(J+2) .EQ. 9999) GO TO 950        ; I1=J1,I2.NE.9999
517:       IF(HIT(I+1) .GT. HIT(J+1)+HIT(I+3)) GO TO 946   ; I1=J1,I2.NE.9999,J2.NE.9999
518:       GO TO 952                               ; I1=J1,I2.NE.9999,J2.NE.9999,SJ1.LT.
519:  950  IF(HIT(I+1) .GT. HIT(J+1) + HIT(I+3)) GO TO 940   ; I1=J1,IS.NE.9999,J2=9999
520:  952  HIT(I) = HIT(I+2)                       ; I1=J1,I2.NE.9999,/J2=9999,SI1.LT.SJ
521:       HIT(I+1) = HIT(I+3)                     ; J2.NE.9999, SI1.LT.S12+SJ1
522:       HIT(I+2) = 9999
523:       HIT(I+3) = 9999
524:       GO TO 925
525:  960  CONTINUE
526: C
```

| | ATTRIBUTES | POSITION | SIZE |
|---|---|---|---|
| **— ARRAY —** | | | |
| F | INTEGER ARRAY | 0 | 612. |
| COUNT | INTEGER ARRAY | 1144 | 2550. |
| SS | INTEGER ARRAY | 1144 | 20. |
| NHIT | INTEGER ARRAY | 2331 | 204. |
| HIT | INTEGER ARRAY | 2521 | 204. |
| SCORET | INTEGER ARRAY | 6050 | 160. |
| IXMIN | INTEGER | 6310 | |
| IXMAX | INTEGER | 6311 | |
| IYMIN | INTEGER | 6312 | |
| IYMAX | INTEGER | 6313 | |
| **— PLOTAG —** | | | |
| PA | INTEGER ARRAY | 0 | 4080. |
| S | INTEGER ARRAY | 0 | 20. |
| IJS | INTEGER | 7760 | |
| XOFS | INTEGER | 7761 | |
| YOFS | INTEGER | 7762 | |
| IPAAB | INTEGER | 7763 | |
| PAA | INTEGER ARRAY | 7764 | 204. |
| AVX | INTEGER | 10300 | |
| AVY | INTEGER | 10301 | |
| **— ARGS —** | | | |
| LATID | INTEGER ARRAY | 0 | 7. |
| ISCDA | INTEGER ARRAY | 7 | 24. |
| NP | INTEGER | 37 | |
| P | INTEGER ARRAY | 40 | 612. |
| IFCDA | INTEGER ARRAY | 1204 | 16. |
| NF | INTEGER | 1224 | |
| ISCOR | INTEGER | 1225 | |
| IFLAG | INTEGER | 1226 | |
| PCN | INTEGER ARRAY | 1227 | 9. |

| ATTRIBUTES | POSITION | SIZE |
|---|---|---|
| — MATGP — | | |
| IPAR | INTEGER ARRAY | 0 | 256. |
| IVARMN | INTEGER | 212 | |
| JSXMX | INTEGER | 211 | |
| IVARMX | INTEGER | 210 | |
| IVARF | INTEGER | 207 | |
| JSMIN | INTEGER | 206 | |
| ASFS | INTEGER | 77 | |
| ASFN | INTEGER | 76 | |
| ERAB | INTEGER | 75 | |
| ASFP | INTEGER | 74 | |
| IOFLAG | INTEGER | 53 | |
| DDX | INTEGER | 45 | |
| IETPN | INTEGER | 44 | |
| IETP | INTEGER | 43 | |
| NYMAX | INTEGER | 42 | |
| NXMAX | INTEGER | 41 | |
| DX | INTEGER | 40 | |
| DELX | INTEGER | 37 | |
| ERAM | INTEGER | 36 | |
| ERAA | INTEGER | 35 | |
| NAT | INTEGER | 34 | |
| MXNBL | INTEGER | 33 | |
| IEOT | INTEGER | 31 | |

STATIC
VARIABLES

| | | | |
|---|---|---|---|
| NBR | INTEGER ARRAY | 0 | 2448. |
| SUMX | INTEGER | 4620 | |
| SUMY | INTEGER | 4621 | |
| SDIV | INTEGER ARRAY | 4622 | 32. |
| CDIV | INTEGER ARRAY | 4662 | 32. |
| NBRS | INTEGER ARRAY | 4722 | 33. |
| RIV | INTEGER ARRAY | 4763 | 23. |
| NPOS | INTEGER ARRAY | 5012 | 5. |
| NMAX | INTEGER ARRAY | 5017 | 5. |
| ISCTVR | INTEGER ARRAY | 5050 | 500. |
| ISTAB | INTEGER ARRAY | 5024 | 512. |
| XOF | INTEGER | 6034 | |
| YOF | INTEGER | 6035 | |
| DPX | INTEGER | 6036 | |
| DPY | INTEGER | 6037 | |
| PX | INTEGER | 6040 | |
| PY | INTEGER | 6041 | |
| PXS | INTEGER | 6042 | |
| PYS | INTEGER | 6043 | |

| | | |
|---|---|---|
| DELTH | INTEGER | 6044 |
| PXLX | INTEGER | 6045 |
| PYLY | INTEGER | 6046 |
| I | INTEGER | 6047 |
| NP3 | INTEGER | 6050 |
| NPCD | INTEGER | 6051 |
| NN | INTEGER | 6052 |
| L | INTEGER | 6053 |
| NRIVS | INTEGER | 6054 |
| J | INTEGER | 6055 |
| K | INTEGER | 6056 |
| IEND | INTEGER | 6057 |
| NRIV | INTEGER | 6060 |
| IT | INTEGER | 6061 |
| N | INTEGER | 6062 |
| JA | INTEGER | 6063 |
| JB | INTEGER | 6064 |
| KK | INTEGER | 6065 |
| NXT1 | INTEGER | 6066 |
| NANGLE | INTEGER | 6067 |
| IBA | INTEGER | 6070 |
| NF3 | INTEGER | 6071 |
| KST | INTEGER | 6072 |
| NY1 | INTEGER | 6073 |
| MMAX | INTEGER | 6074 |
| JZ | INTEGER | 6075 |
| NP8 | INTEGER | 6076 |
| IH | INTEGER | 6077 |
| JH | INTEGER | 6100 |
| LM | INTEGER | 6101 |
| LM1 | INTEGER | 6102 |
| LL | INTEGER | 6103 |
| NB4 | INTEGER | 6104 |
| KZ | INTEGER | 6105 |
| JK | INTEGER | 6106 |
| IS | INTEGER | 6107 |
| NPK | INTEGER | 6110 |
| IER | INTEGER | 6111 |
| IRA | INTEGER | 6112 |
| MPT | INTEGER | 6113 |
| IDX | INTEGER | 6114 |
| IDY | INTEGER | 6115 |
| IR | INTEGER | 6116 |
| ITMP | INTEGER | 6117 |
| NP2 | INTEGER | 6120 |
| NP2CD | INTEGER | 6121 |
| KM | INTEGER | 6122 |
| KKX | INTEGER | 6123 |
| JF | INTEGER | 6124 |
| LAMIN | INTEGER | 6125 |
| NX | INTEGER | 6126 |
| NY | INTEGER | 6127 |
| ICXF | INTEGER | 6130 |
| ICYF | INTEGER | 6131 |
| JFXMIN | INTEGER | 6132 |
| JFYMIN | INTEGER | 6133 |
| NX1 | INTEGER | 6134 |
| LX | INTEGER | 6135 |
| LY | INTEGER | 6136 |
| IANS | INTEGER | 6137 |
| I1 | INTEGER | 6140 |
| IANGM | INTEGER | 6141 |
| NJ | INTEGER | 6142 |
| IABIAS | INTEGER | 6143 |
| IJ | INTEGER | 6144 |

# 0 050 842

| | | | |
|---|---|---|---|
| IANG | INTEGER | 6145 |
| NSS | INTEGER | 6146 |
| ISCORS | INTEGER | 6147 |
| IN | INTEGER | 6150 |
| JN | INTEGER | 6151 |
| NMAZ | INTEGER | 6152 |
| NANG | INTEGER | 6153 |
| IEA | INTEGER | 6154 |
| IEX | INTEGER | 6155 |
| IEY | INTEGER | 6156 |
| IET | INTEGER | 6157 |
| IT1 | INTEGER | 6160 |
| IT2 | INTEGER | 6161 |
| NBRI | INTEGER | 6162 |
| JFM | INTEGER | 6163 |
| JJ | INTEGER | 6164 |
| KI | INTEGER | 6165 |
| IK | INTEGER | 6166 |
| JSP | INTEGER | 6167 |
| IFM | INTEGER | 6170 |
| MXI | INTEGER | 6171 |
| MYI | INTEGER | 6172 |
| MT1 | INTEGER | 6173 |
| MXIS | INTEGER | 6174 |
| MYIS | INTEGER | 6175 |
| MTIS | INTEGER | 6176 |
| NMM | INTEGER | 6177 |
| ID | INTEGER | 6200 |
| JSX | INTEGER | 6201 |
| ITSX | INTEGER | 6202 |
| ISCORV | INTEGER | 6203 |
| ITSXS | INTEGER | 6204 |
| IVX | INTEGER | 6205 |
| IVY | INTEGER | 6206 |
| IVT | INTEGER | 6207 |
| IXJV | INTEGER | 6210 |
| MX | INTEGER | 6211 |
| MX2 | INTEGER | 6212 |
| MX2N | INTEGER | 6213 |
| MXN | INTEGER | 6214 |
| IPSINC | INTEGER | 6215 |

— — EXTERNAL SUBPROGRAMS — —

| | | | | |
|---|---|---|---|---|
| .ONCE | .DPSH | .DATI | .IERR | .ILEN |
| .IREC | .IATT | .FOPE | RDBLK | .FCLO |
| .ITYP | .FWRS | .TTYP | ASORT | MINO |

| IDENTIFIEW | | | REFERENCES |
|---|---|---|---|
| ASFN | 18 26 | 355 | |
| ASFP | 18 26 | 285 | |
| ASFS | 18 26 | 451 | |
| ASORT | 57 | | |
| AVX | 18 9 | 68 74 | |
| AVY | 18 9 | 69 75 | |
| CDIV | 18 31 | 134 135 | |
| COUNT | 18 8 | 26 | 179 208 209 211 212 222 223 |
| DDX | 18 26 | 352 354 | |
| DELTH | 18 35 | 56 | 141 183 188 260 |
| DELX | 18 26 | 155 157 | 161 162 166 167 207 255 256 |
| DPX | 18 325 | 340 431 | |
| DPY | 18 326 | 341 434 | |
| DX | 18 26 | 282 284 | |
| ERAA | 18 26 | 56 204 | |
| ERAB | 18 26 | 350 | |

28

| IDENTIFIEW | REFERENCES |
|---|---|
| ERAM | 18 26 280 |
| F | 18 8 204 205 206 207 214 279 281 283 303 325 326 349 351 353 431 434 437 |
| HIT | 18 26 258 288 289 290 293 294 295 296 297 298 299 318 319 320 345 458 468 469 472 473 475 476 477 480 481 483 484 490 491 495 496 497 498 499 501 502 503 504 505 507 508 510 511 512 513 514 516 517 519 520 521 522 523 531 532 |
| I | 65 66 67 73 74 75 76 83 87 88 117 143 145 178 179 195 201 217 221 222 223 228 233 235 257 258 264 265 266 272 306 375 376 377 378 387 389 390 391 402 403 404 405 406 408 409 410 423 425 427 441 464 468 469 472 473 475 476 477 480 481 483 484 485 489 490 491 492 501 503 504 505 510 517 519 520 521 522 523 525 530 531 532 536 |
| IABIAS | 191 193 201 261 263 272 330 332 342 420 437 |
| IANG | 201 204 214 272 279 303 342 349 |
| IANGM | 183 188 191 |
| IANS | 180 224 225 227 242 |
| IBA | 192 217 262 306 |
| ICXF | 159 161 197 |
| ICYF | 160 162 198 |
| ID | 431 432 433 434 435 436 437 438 439 440 |
| ID1 | 6 |
| ID3 | 6 |
| ID4 | 6 |
| ID5 | 6 |
| ID6 | 6 |
| IDX | 90 92 |
| IDY | 91 92 |
| IEA | 279 280 285 349 350 355 |
| IEND | 103 105 110 112 113 |
| IEOT | 26 242 |
| IER | 44 |
| IET | 285 286 288 289 355 356 360 364 365 368 |
| IETP | 26 286 |
| IETPN | 26 356 |
| IEX | 281 282 285 351 352 355 |
| IEY | 283 284 285 353 354 355 |
| IFCDA | 18 10 |
| IFLAG | 10 39 146 |
| IFM | 377 382 383 491 496 497 |
| IH | 265 288 289 290 293 294 295 296 297 298 299 357 358 359 360 361 362 364 365 366 367 368 |
| I1 | 182 190 194 |
| IJ | 194 196 197 198 254 266 321 339 430 |
| IJS | 9 |
| IK | 339 340 341 430 431 434 |
| IN | 247 248 251 255 |
| IOFLAG | 26 |
| IPAAB | 9 |
| IPAR | 18 11 26 93 |
| IPSINC | 533 534 |
| IR | 92 93 94 96 100 |
| IRA | 56 57 |
| IS | 317 318 319 320 458 |
| ISCDA | 18 10 |
| ISCOR | 18 10 48 529 533 535 537 538 541 |
| ISCORS | 241 537 538 541 |
| ISCORV | 446 457 458 532 534 535 |
| ISCTVR | 18 26 457 |
| ISTAB | 18 26 44 |
| IT | 82 115 116 |

| IDENTIFIEW | REFERENCES |
|---|---|
| IT1 | 294 298 |
| IT2 | 295 299 |
| ITMP | 104 107 109 111 |
| ITSX | 445 452 453 454 455 456 |
| ITSXS | 447 |
| IVARF | 26 449 450 451 |
| IVARMN | 26 453 |
| IVARMX | 26 454 456 |
| IVT | 451 452 |
| IVX | 449 452 |
| IVY | 450 452 |
| JV | 456 457 |
| MAX | 8 155 159 |
| MIN | 8 155 159 |
| MAX | 8 157 160 |
| MIN | 8 157 160 |
|  | 89 90 91 101 102 203 204 205 206 207 214 215 216 278 |
|  | 279 281 283 290 303 304 305 345 346 347 348 349 351 |
|  | 353 367 378 379 380 381 382 383 384 385 388 389 393 |
|  | 394 396 397 398 399 401 402 427 431 434 437 467 468 |
|  | 469 472 473 475 476 477 478 492 493 494 495 496 497 |
|  | 498 499 502 503 507 508 510 511 512 513 514 516 517 |
|  | 519 |
| A | 123 133 |
| B | 124 133 136 |
| F | 139 140 141 145 |
| FM | 319 347 |
| FXMIN | 161 255 |
| FYMIN | 162 256 |
| H | 287 288 289 290 291 292 293 294 295 296 297 298 299 |
| J | 320 325 326 |
| X | 343 344 369 |
| N | 248 249 250 256 |
| SMIN | 26 442 |
| SP | 344 345 |
| SX | 442 443 444 456 |
| SXMX | 26 443 |
| Z | 243 247 248 253 539 |
|  | 95 96 97 98 99 100 101 142 144 145 266 270 271 336 |
| MPT | 57 |
| MTI | 416 439 451 |
| MTIS | 419 440 451 |
| MX | 465 469 470 472 479 481 |
| MX2 | 466 470 475 476 482 484 |
| MX2N | 471 477 483 |
| MXI | 414 432 449 |
| MXIS | 417 433 449 |
| MXN | 471 473 480 |
| MXNBL | 26 51 |
| MYI | 415 435 450 |
| MYIS | 418 436 450 |
| N | 133 134 135 136 202 203 273 274 278 |
| NANG | 260 261 330 420 |
| NANGLE | 187 229 234 236 |
| NAT | 26 36 38 56 123 124 141 187 236 |
| NBR | 169 328 329 375 380 410 423 441 |
| NB4 | 18 116 337 428 |
| NBRI | 313 315 337 428 |
| NBRS | 18 85 98 101 106 107 108 109 116 |
| NF | 18 10 151 |
| NF3 | 151 203 216 274 278 305 |

| IDENTIFIEW | | | | | | | | | | | | | REFERENCES | |
|---|---|---|---|---|---|---|---|---|---|---|---|---|---|---|
| NHIT | 18 | 26 | 329 | 358 | 359 | 360 | 361 | 362 | 364 | 365 | 367 | 368 | 376 | 377 |
| | 381 | 382 | 383 | 384 | 385 | 387 | 388 | 389 | 390 | 391 | 393 | 394 | 396 | |
| | 397 | 398 | 399 | 401 | 402 | 403 | 404 | 405 | 406 | 408 | 409 | 425 | 427 | |
| NJ | 189 | 202 | 215 | 259 | 273 | 304 | 327 | | | | | | | |
| NMAX | 18 | 229 | 234 | 253 | | | | | | | | | | |
| NMAZ | 253 | 254 | 260 | | | | | | | | | | | |
| NMM | 421 | 426 | 442 | 449 | 450 | 451 | | | | | | | | |
| NN | 81 | 83 | 89 | 102 | 117 | | | | | | | | | |
| NP | 18 | 10 | 37 | 52 | 57 | 61 | 68 | 69 | 81 | 121 | 143 | 145 | 168 | 195 |
| | 217 | 264 | 306 | 314 | 460 | | | | | | | | | |
| NP2 | 121 | 122 | | | | | | | | | | | | |
| NP2CO | 122 | 136 | 182 | 190 | 254 | | | | | | | | | |
| NP3 | 61 | 62 | 65 | 67 | | | | | | | | | | |
| NP8 | 168 | 257 | 258 | 464 | 485 | 489 | 494 | 525 | 530 | 536 | | | | |
| NPCD | 62 | 73 | 76 | 126 | 137 | | | | | | | | | |
| NPK | 37 | 38 | | | | | | | | | | | | |
| NPOS | 18 | 228 | 233 | 247 | 248 | | | | | | | | | |
| NRIV | 51 | 52 | 80 | 103 | 114 | 116 | 169 | 313 | 315 | 336 | 370 | | | |
| NRIVS | 80 | 84 | 86 | 95 | 98 | 99 | | | | | | | | |
| NSS | 222 | 224 | 225 | 227 | | | | | | | | | | |
| NX | 155 | 156 | 161 | 163 | 166 | | | | | | | | | |
| NX1 | 163 | 165 | | | | | | | | | | | | |
| NXMAX | 26 | 155 | | | | | | | | | | | | |
| NXT1 | 165 | 178 | 179 | 221 | 235 | | | | | | | | | |
| NY | 157 | 158 | 162 | 164 | 167 | 250 | | | | | | | | |
| NY1 | 164 | 165 | 207 | 209 | 212 | 247 | 248 | | | | | | | |
| NYMAX | 26 | 157 | | | | | | | | | | | | |
| P | 18 | 10 | 57 | | | | | | | | | | | |
| PA | 18 | 9 | 26 | 134 | 135 | 197 | 198 | 270 | 271 | 325 | 326 | 340 | 341 | 431 |
| | 434 | | | | | | | | | | | | | |
| PAA | 18 | 9 | 145 | 201 | 272 | 342 | 437 | | | | | | | |
| PCN | 18 | 10 | | | | | | | | | | | | |
| PX | 18 | 87 | 90 | 128 | 129 | 134 | 197 | 199 | 205 | 270 | 281 | 340 | 351 | |
| PXLX | 18 | 129 | 134 | 135 | | | | | | | | | | |
| PXS | 18 | 120 | 134 | 135 | | | | | | | | | | |
| PY | 18 | 88 | 91 | 130 | 131 | 135 | 198 | 200 | 206 | 271 | 283 | 341 | 353 | |
| PYLY | 18 | 200 | 207 | | | | | | | | | | | |
| PYS | 18 | 131 | 134 | 135 | | | | | | | | | | |
| ROHLK | 44 | | | | | | | | | | | | | |
| RIV | 18 | 86 | 94 | 96 | 97 | 100 | | | | | | | | |
| S | 18 | 26 | 66 | 67 | 74 | 75 | 76 | | | | | | | |
| SCORET | 18 | 8 | | | | | | | | | | | | |
| SDIV | 18 | 29 | 134 | 135 | | | | | | | | | | |
| SS | 18 | 26 | 74 | 75 | 76 | 87 | 88 | 90 | 91 | 128 | 130 | 139 | 145 | |
| SUMX | 18 | 63 | 66 | 68 | | | | | | | | | | |
| SUMY | 18 | 64 | 67 | 69 | | | | | | | | | | |
| XOF | 18 | 255 | 270 | | | | | | | | | | | |
| XOFS | 18 | 9 | | | | | | | | | | | | |
| YOF | 18 | 256 | 271 | | | | | | | | | | | |
| YOFS | 18 | 9 | | | | | | | | | | | | |
| 122 | 257 | 258 | | | | | | | | | | | | |
| 15 | 65 | 67 | | | | | | | | | | | | |
| 25 | 73 | 75 | | | | | | | | | | | | |
| 260 | 204 | 214 | | | | | | | | | | | | |
| 275 | 203 | 205 | 206 | 213 | 216 | | | | | | | | | |
| 2783 | 291 | 300 | | | | | | | | | | | | |
| 2786 | 288 | 292 | 293 | 301 | | | | | | | | | | |
| 279 | 280 | 303 | | | | | | | | | | | | |
| 280 | 278 | 282 | 284 | 286 | 302 | 305 | | | | | | | | |
| 290 | 262 | 264 | 303 | 306 | | | | | | | | | | |
| 292 | 274 | 307 | | | | | | | | | | | | |
| 3 | 178 | 179 | | | | | | | | | | | | |
| 30 | 126 | 137 | | | | | | | | | | | | |

| IDENTIFIEW | | | | | | | | REFERENCES |
|---|---|---|---|---|---|---|---|---|
| 300 | 192 | 195 | 214 | 217 | | | | |
| 380 | 84 | 85 | | | | | | |
| 399 | 225 | 231 | | | | | | |
| 40 | 133 | 136 | | | | | | |
| 400 | 221 | 224 | 230 | 235 | | | | |
| 500 | 187 | 236 | | | | | | |
| 601 | 249 | 252 | | | | | | |
| 620 | 95 | 98 | | | | | | |
| 65 | 39 | 147 | | | | | | |
| 650 | 96 | 100 | | | | | | |
| 750 | 89 | 93 | 94 | 102 | | | | |
| 760 | 104 | 113 | | | | | | |
| 770 | 105 | 106 | 110 | | | | | |
| 780 | 114 | 116 | | | | | | |
| 799 | 111 | 114 | | | | | | |
| 800 | 83 | 117 | | | | | | |
| 8030 | 43 | 46 | 50 | | | | | |
| 810 | 328 | 329 | | | | | | |
| 820 | 361 | 365 | | | | | | |
| 825 | 359 | 364 | | | | | | |
| 830 | 360 | 366 | | | | | | |
| 835 | 358 | 363 | 367 | | | | | |
| 845 | 343 | 347 | 350 | 352 | 354 | 356 | 364 | 369 |
| 850 | 331 | 336 | 338 | 346 | 370 | | | |
| 855 | 377 | 407 | | | | | | |
| 858 | 379 | 381 | 383 | 386 | 395 | 400 | | |
| 860 | 382 | 387 | | | | | | |
| 862 | 389 | 393 | | | | | | |
| 864 | 388 | 396 | 402 | | | | | |
| 865 | 387 | 401 | | | | | | |
| 866 | 401 | 403 | | | | | | |
| 868 | 380 | 408 | | | | | | |
| 870 | 375 | 376 | 392 | 410 | | | | |
| 880 | 423 | 425 | 429 | 441 | | | | |
| 885 | 444 | 449 | | | | | | |
| 890 | 448 | 458 | | | | | | |
| 895 | 316 | 459 | | | | | | |
| 898 | 314 | 318 | 460 | | | | | |
| 90 | 143 | 145 | | | | | | |
| 905 | 469 | 475 | | | | | | |
| 910 | 467 | 474 | 475 | 478 | | | | |
| 915 | 468 | 479 | | | | | | |
| 920 | 464 | 479 | 482 | 485 | | | | |
| 925 | 491 | 524 | | | | | | |
| 930 | 493 | 495 | 497 | 500 | 509 | 515 | | |
| 935 | 496 | 501 | | | | | | |
| 937 | 504 | 510 | | | | | | |
| 940 | 503 | 507 | 519 | | | | | |
| 945 | 502 | 510 | | | | | | |
| 946 | 511 | 517 | | | | | | |
| 948 | 501 | 516 | | | | | | |
| 950 | 516 | 519 | | | | | | |
| 952 | 518 | 520 | | | | | | |
| 960 | 489 | 490 | 494 | 506 | 525 | | | |
| 970 | 530 | 531 | 536 | | | | | |
| 990 | 243 | 537 | 539 | | | | | |
| 992 | 242 | 540 | | | | | | |
| KGS | 10 | | | | | | | |
| RRAY | 8 | | | | | | | |
| ATGP | 11 | | | | | | | |
| VMAT | 0 | 360 | 377 | 535 | 719 | 1169 | 1695 | 1228 |
| LOTAG | 9 | | | | | | | |

**0 050 842**

APPENDIX II

| NAME | PROGRAM VARIABLES — DESCRIPTION |
|---|---|
| ASFP | θ Scale Factor for Minutia Pairing Distance |
| COUNT(2500) | Registration X, Y Histogram |
| DELTH | Δ angle between rotations in Units of 1.40625 degrees each |
| DDX | Minutia X, Y tolerance values for neighborhood scoring |
| DELX | Minutia X, Y cell size for print registration |
| DX | Tolerance values for minutia pairing |
| DPX | X offset to exactly overlay a registered search minutia with its mating file minutia |
| DPY | Y offset to exactly overlay a registered search minutia with its mating file minutia |
| ERAA | Minutia Angle tolerance for print registration |
| ERAB | Minutia Angle tolerance for neighboring pairing |
| ERAM | Minutia angle tolerance for minutia pairing |
| F(612) | Sorted file minutia X, Y θ values |
| HIT(1632) | Array of mating file and search minutia |
| IFLAG | Switch, if = 1, then search data is ready |
| IXMAX | Maximum X value of file minutia set |
| IXMIN | Maximum X value of file minutia set |
| IYMAX | Maximum Y value of file minutia set |
| IYMIN | Maximum Y value of file minutia set |
| ICXF | X Coordinate of minutia pattern center for file minutia set |
| ICYF | Y Coordinate of minutia pattern center for file minutia set |
| IANS | Maximum value of registration histogram |
| ISCORS | Match score for a given registration histogram maximum |
| ISCOR | Final match score (maximum of ISCORS values) |
| ASFP | θ Scale Factor for Minutia Pairing Distance |
| COUNT(2500) | Registration X, Y Histogram |
| DELTH | Δ angle between rotations in Units of 1.40625 degrees each |
| DDX | Minutia X, Y tolerance values for neighborhood scoring |
| DX | Minutia X, Y cell size for print registration, tolerance values for minutia pairing |
| DPX | X offset to exactly overlay a registered search minutia with its mating file minutia |
| DPY | Y offset to exactly overlay a registered search minutia with its mating file minutia |
| ERAA | Minutia Angle tolerance for print registration |
| ERAB | Minutia Angle Tolerance for Neighboring Pairing |
| ERAM | Minutia angle tolerance for minutia pairing |
| F(612) | Sorted file minutia X, Y θ values |
| HIT(1632) | Array of mating file and search minutia |
| IFLAG | Switch, if = 1, then search data is ready |
| IXMAX | Maximum X values file minutia set |
| IXMIN | Maximum X values file minutia set |
| IYMAX | Maximum Y values file minutia set |
| IYMIN | Maximum Y values file minutia set |
| ICXF | X Coordinate of minutia pattern center for file minutia set |
| ICYF | Y Coordinate of minutia pattern center for file minutia set |
| IANS | Maximum value of registration histogram |
| ISCORS | Match score for a given registration histogram maximum |
| ISCOR | Final match score (maximum of ISCORS values) |
| ISTAB | Array Containing Score Table |
| IJ | Pointer to PA array for best set of rotated search minutia |
| *IEOT | Early out threshold |
| IETP | Distance Tolerance for minutia pairing |
| ITSX | Scaled Variance of Matching Neighboring Minutia |
| ISCTVR(500) | Score Table |
| ISCORV | Individual Minutia Score |
| JXMIN | X Coordinate of Lower Left Corner of File Minutia Pattern |
| JYMIN | Y Coordinate of Lower Left Corner of File Minutia Pattern |
| JSCOR | Number of matching neighbors for a particular search minutia |
| KF(700) | Array of file minutia that are mated with search minutia |
| LX | 1/2 width of effective file minutia pattern area |
| LY | 1/2 height of effective file minutia pattern area |
| LAMIN | Maximum angle bias for search minutia angles |
| NHIT(48) | Array of file minutia mating with neighbors of a given search minutia |
| MMAX | Number of maximums in registration histograms |

33

# 0 050 842

APPENDIX II (Continued)

| NAME | PROGRAM VARIABLES — DESCRIPTION |
|---|---|
| NB4 | Number of neighbors to use times 4 |
| NF | Number of file minutia |
| NMAX(5) | Array of best rotation for registration |
| NAT | Number of search print rotations to use |
| NF3 | 3 Times the number of file minutia |
| NRIV | Number of neighbors to use for neighborhood scoring |
| NP | Number of search minutia |
| NBR(2040) | Neighbor array |
| NX | Count array size in X (number of cells to use in count array in X direction) |
| NMM | Number of matching neighbors |
| NY | Count array size in Y (number of cells to use in count array in Y direction) |
| NP8 | Number of search minutia times 8 |
| NXMAX | Maximum number of count array cells in X direction |
| NYMIN | Maximum number of count array cells in Y direction |
| P(612) | Unsorted search minutia |
| PA(2040) | Rotated search minutia X, Y values |
| PAA(204) | Search minutia angle values |
| R40STB | Disk file containing score table |
| S(612) | Sorted Search Minutia |
| SS(612) | Sorted, Centered, Search Minutia |
| XOF | X offset to overlay search minutia on file minutia for registration histogram maximum |
| YOF | Y offset to overlay search minutia on file minutia for registration histogram maximum |

## Claims

1. A method employing a programmed computer for comparing the minutiae of a search fingerprint (the "search minutiae") with the minutiae of a file fingerprint (the "file minutiae") to determine if the search fingerprint closely resembles the file fingerprint, including the steps of pairing mating search (S1, S2 . . .) and file (F1, F2 . . .) minutiae, computing scores ($S_M$) for individual pairs of mating search and file minutiae (S4, F2; S9, F14 . . .), and summing the computed scores ($S_M$) to obtain a final match score indicative of the overall resemblance of the search fingerprint to the file fingerprint, the method being characterised by:

a) prior to the pairing step, rotating and translating the search and file fingerprints relatively to one another ($N_R$) to determine a selected rotation ($\alpha$) and translation ($\Delta X$, $\Delta Y$) which most nearly brings the search minutiae (S1, S2 . . .) into registration with the file (F1, F2 . . .) minutiae (Figures 5, $M_M*$);

b) carrying out the step of pairing mating search and file minutiae (S4, F2; S9, F14 . . .) based upon the selected rotation and translation; and

c) computing the individual minutia score ($S_M$) for each search minutia (S1, S2 . . .) that has a mating file minutia based on the spatial and angular relationship between the other mating file and search minutiae (Tables 7(c), 7(a)) located within a neighbourhood of each such search minutia (S1, S2 . . .), the step of computing an individual score comprising the steps of

(c1) computing a variance ($\sigma^2$) of the spatial and angular relationships between file and search minutiae of the neighbouring pairs of file and search minutiae (Tables 7(b), 7(d) and

(c2) computing an individual minutiae score ($S_M$) based upon the number of neighbouring pairs ($N_M$) and the variances ($\sigma^2$) of such pairs.

2. A method according to claim 1, wherein step c2 comprises selecting an individual score that increases with increase of the number of neighbouring pairs and decreases with increase in the amount of variance.

3. A method according to claim 2, wherein the individual score is selected from a scoring table having the number of neighbouring pairs as one dimension and a scaled variance as the other dimension, the table having entries denoting scores that increase in the one dimension as the number of neighbouring pairs increases and that decrease in the other dimension as the magnitude of the scaled variance increases.

4. A method according to claim 1, including the steps of selecting a number of neighbouring pairs of file and search minutiae displaced from an individual minutia in any direction by a distance not greater than a predetermined distance.

5. A method according to any of the preceding claims, wherein the variances are computed as the average of the sum of the squares of translational and angular differences between file and search minutiae of the respective pairs.

6. A method according to any of the preceding claims, further comprising:

(a) sorting the search minutiae into angle order;

(b) finding the closest neighbours for each search minutia;

34

(c) sorting the file minutiae into angle order; and

(d) computing maximum and minimum coordinates for the file minutiae.

7. A method according to any of claims 1 to 3, wherein step a) comprises terminating the comparison between the minutiae of a search fingerprint and the minutiae of a file fingerprint whenever the degree of registration of the search minutiae with the file minutiae fails to exceed an operator selected threshold.

8. A method according to any of the preceding claims, wherein the step of rotating and translating comprises:

(a) rotating the search minutiae through a preselected set of rotations;

(b) for each rotated set of search minutia constructing a histogram showing the number of coincident search and file minutiae for various translations of the search minutiae relative to the file minutiae; and

(c) determining the rotation and translation which most nearly brings the search minutia into registration with the file minutiae by comparing the magnitudes of the largest adjacent blocks of entries in each of the histograms.

9. A method of comparing minutiae of a search fingerprint (search minutiae) with minutiae of a file fingerprint (file minutiae) to determine if the two fingerprints match one another, including the steps of pairing mating search (S1, S2 . . .) and file (F1, F2 . . .) minutiae, computing scores ($S_M$) for individual pairs of mating search and file minutiae (S4, F2; S9, F14 . . .), and summing the computed scores ($S_M$) to obtain a final match score indicative of the overall resemblance of the search fingerprint to the file fingerprint, the method being characterised by:

(a) prior to the pairing step, relatively rotating the search and file fingerpints through a plurality of discrete rotations ($N_R$);

(b) determining for each rotation ($\alpha$) a translation ($\Delta X$, $\Delta Y$) of the search fingerprint that produces a maximum number (Figure 5) of mating pairs of file and search minutiae;

(c) selecting that rotation ($\alpha$) and translation ($\Delta X$, $\Delta Y$) which produces the largest ($M_M$*) of the maximum numbers of mating pairs;

(d) carrying out the step of pairing mating search and file minutiae (S4, F2; S9, F14 . . .) based upon the selected rotation and translation; and

(e) for the selected rotation and translation, computing the individual minutiae score ($S_M$, Table 7(e)) for each search minutiae (S4, S9 . . .) that has a mating file minutiae (F2, F14 . . .) based upon comparisons ($\sigma^2$, $N_M$, Tables 7(b), 7(d)) of angular and spatial relations of other mating file and search minutiae (Tables 7(a), 7(c)) located in a neighbourhood of each such search minutiae.

10. A method according to claim 9, wherein steps b and c comprise: for each discrete rotation constructing a histogram showing the number of mating search and file minutiae for various relative translations of search and file fingerprints; and determining the rotation and translation which most nearly brings the search minutiae into registration with the file minutiae by comparing the magnitudes of the largest adjacent blocks of entries in each of the histograms.

11. A method according to claim 9 or claim 10, further including the step of terminating the comparison if the largest of the maximum numbers of mating pairs fails to exceed a threshold.

12. A method according to any of claims 9 to 11, wherein steps a to c comprise selecting pairs of file and search minutiae for which the direction values thereof differ by less than a selected matching threshold; and for each discrete rotation, relatively translating the search and file fingerprints through a number of translations at each of which the file and search minutiae of one of the selected pairs coincide with one another.

13. A method according to any of claims 9 to 12, wherein the step of computing an individual score comprises the steps of computing a variance of the spatial and angular relationships between file and search minutiae of neighbouring pairs of file and search minutiae; and computing an individual minutiae score based upon the number of neighbouring pairs and the variances of such pairs.

**Patentansprüche**

1. Verfahren unter Verwendung eines programmierten Computers zum Vergleichen der Elemente des Hautleistenmusters eines in einer Kartei registrierten Fingerabdrucks (der Elemente eines "registrierten Hautleistenmusters"), um herauszufinden, ob der gesuchte Fingerabdruck sehr dem registrierten Fingerabdruck gleicht, darin mitinbegriffen die Schritte des Paarens zueinander passender gesuchter (S1, S2 . . .) und registrierter (F1, F2 . . .) Elemente, des Berechnens erzielter Uebereinstimmungswerte ($S_M$) für individuelle Paare zueinander passender Elemente des gesuchten und registrierten Hautleistenmusters (S4, F2; S9, F14 . . .), und des Addierens der berechneten Uebereinstimmungswerte ($S_M$), um einen End-Paarungsübereinstimmungswert zu erhalten, der für die Gesamtähnlichkeit des gesuchten Fingerabdrucks mit dem registrierten Fingerabdruck kennzeichnend ist, dadurch gekennzeichnet, dass

a) vor dem Paarungsschritt die gesuchten und registrierten Fingerabdrücke relativ zueinander gedreht und parallel verschoben werden ($N_R$), um einen gewählten Drehwinkel ($\theta$) und eine gewählte Verschiebung ($\Delta x$, $\Delta y$) zu ermitteln, durch welche die Elemente des gesuchten Hautleistenmusters (S1, S2 . . .) mit denen des registrierten Hautleistenmusters (F1, F2 . . .) weitgehend zur Deckung gelangen (Fig. 5, $M_M$*);

b) der Schritt des Paarens zueinander passender Elemente des gesuchten und registrierten Hautleistenmusters (S4, F2; S9, F14 . . .) auf der Basis der gewählten Drehung und Verschiebung durchgeführt wird; und

# 0 050 842

c) der individuelle Uebereinstimmungswert ($S_M$) der Hautleistenmuster für jedes Element des gesuchten Hautleistenmusters (S1, S2 . . .) bereichnet wird, für das es ein dazu passendes Element des registrierten Hautleistenmusters gibt, auf der Basis der räumlichen und winkelmässigen Beziehungen zwischen den anderen, zueinander passenden Elementen der registrierten und gesuchten Hautleistenmuster (Tabellen 7(c), 7(a)), gelegen in der Nähe eines jeden solchen Elementes des gesuchten Hautleistenmusters (S1, S2 . . .), wobei der Schritt der Berechnung eines individuellen Uebereinstimmungswertes sich zusammensetzt aus den Schritten der

(c1) Berechnung einer Varianz ($\sigma^2$) der räumlichen und winkelmässigen Beziehungen zwischen den Elementen der registrierten und gesuchten Hautleistenmuster benachbarter Elementpaare des registrierten und gesuchten Hautleistenmusters (Tabellen 7(b), 7(d)),

(c2) Berechnung eines individuellen Hautleistenmuster-Uebereinstimmungswertes ($S_M$) auf der Grundlage der Anzahl benachbarter Paare ($N_M$) und der Varianz ($\sigma^2$) dieser Paare.

2. Verfahren nach Anspruch 1, dadurch gekennzeichnet, dass Schritt c2 aus der Auswahl eines einzelnen Uebereinstimmungswertes besteht, der zunimmt mit der Zunahme der Anzahl benachbarter Paare und abnimmt mit der Zunahme des Betrages der Varianz.

3. Verfahren nach Anspruch 2, dadurch gekennzeichnet, dass der individuelle Uebereinstimmungswert aus einer Uebereinstimmungswerttabelle ausgewählt wird, bei der die Anzahl benachbarter Paare in der einen Dimension und eine massstäblich angepasste Varianz in der anderen Dimension aufgetragen wird, wobei in der Tabelle Uebereinstimmungswerte eingetragen werden, die mit der Anzahl banachbarter Paare in der einen Dimension zunehmen und die mit der Zunahme der Grösse der massstäblich angepassten Varianz in der anderen Dimension abnehmen.

4. Verfahren nach Anspruch 1, dadurch gekennzeichnet, dass es die Schritte der Auswahl einer Anzahl benachbarter Elementpaare registrierter und gesuchter Hautleistenmuster enthält, die von einem einzelnen Hautleistenmusterelement in einer beliebigen Richtung um einen Abstand verschoben sind, der nicht grösser als ein vorgegebener Abstand ist.

5. Verfahren nach einem der vorhergehenden Ansprüche, dadurch gekennzeichnet, dass die Varianzen als Mittelwerte der Summe der Quadrate der Verschiebungs- und Winkeldifferenzen zwischen den Elementen des registrierten und gesuchten Hautleistenmusters der entsprechenden Paare berechnet werden.

6. Verfahren nach einem der vorhergehenden Ansprüche, dadurch gekennzeichnet, dass es umfasst:

(a) das Sortieren der Elemente des gesuchten Hautleistenmusters nach ihrem Winkel;

(b) das Finden der engsten Nachbarn bei jedem Element des gesuchten Hautleistenmusters;

(c) das Sortieren der Elemente des registrierten Hautleistenmusters nach ihrem Winkel; und

(d) das Berechnen der Maximal- und Minimalkoordinaten für die Elemente des registrierten Hautleistenmusters.

7. Verfahren nach einem der vorhergehenden Ansprüche 1 bis 3, dadurch gekennzeichnet, dass der Schritt a) besteht aus der Beendigung des Vergleiches zwischen den Hautleistenmusterelementen eines gesuchten Fingerabdrucks und den Hautleistenmusterelementen eines registrierten Fingerabdrucks jedesmal dann, wenn der Grad der Deckung der Elemente des gesuchten Hautleistenmusters mit denen des registrierten Hautleistenmusters nicht einen vom Operator gewählten Schwellenwert überschreitet.

8. Verfahren nach einem der vorhergehenden Ansprüche, dadurch gekennzeichnet, dass der Schritt des Drehens und Parallelverschiebens umfasst:

(a) Drehen des gesuchten Fingerabdrucks um eine vorgewählte Serie von Drehungen;

(b) für jede Serie von Drehungen des gesuchten Fingerabdrucks, Konstruktion eines Histogrammes in dem die Anzahl genau übereinstimmender Elemente der gesuchten und registrierten Hautleistenmuster für verschiedene Parallelverschiebungen des gesuchten Hautleistenmusters relativ zum registrierten Hautleistenmuster dargestellt ist; und

(c) Ermittlung der Drehung und Parallelverschiebung, durch welche das gesuchte Hautleistenmuster am besten mit dem registrierten Hautleistenmuster zur Deckung gebracht wird durch Vergleich der Amplituden der grössten benachbarten Blöcke von Eintragungen in jedes der Histogramme.

9. Verfahren zum Vergleich von Hautleistenmusterelementen eines gesuchten Fingerabdrucks (Elementen eines gesuchten Hautleistenmusters) mit Hautleistenmusterelementen eines registrierten Fingerabdrucks (Elementen eines registrierten Hautleistenmusters), um festzustellen, ob die beiden Fingerabdrücke miteinander übereinstimmen, darin mitinbegriffen die Schritte des Paarens zueinander passender gesuchter (S1, S2 . . .) und registrierter (F1, F2 . . .) Elemente, des Berechnens von Uebereinstimmungswerten ($S_M$) für individuelle Paare zueinander passender Elemente des gesuchten und registrierten Hautleistenmusters (S4, F2; S9, F14 . . .) und des Addierens der berechneten Uebereinstimmungswerte ($S_M$), um einen End-Paarungsübereinstimmungswert zu erhalten, der für die Gesamtähnlichkeit des gesuchten Fingerabdrucks mit dem registrierten Fingerabdruck kennzeichnend ist, dadurch gekennzeichnet, dass

a) vor dem Paarungsschritt die gesuchten und registrierten Fingerabdrücke relativ zueinander um mehrere diskrete Drehungen ($N_R$) gedreht werden;

(b) für jede Drehung ($\alpha$) jene Parallelverschiebung ($\Delta x$ $\Delta y$) des gesuchten Fingerabdrucks bestimmt wird, durch die eine maximale Anzahl (Fig. 5) zueinander passender Elementpaare des registrierten und gesuchten Hautleistenmusters erzeugt wird;

# 0 050 842

(c) jene Drehung (α) und Parallelverschiebung (Δx, Δy) ausgewählt werden, durch welche das grösste Paar ($M_M$*) der maximalen Anzahl zueinander, passender Paare erzeugt wird.

10. Verfahren nach Anspruch 9, dadurch gekennzeichnet, dass die Schritte b und c bestehen aus: für jede diskrete Drehung, der Konstruktion eines Histogrammes in dem die Anzahl zueinander passender Elemente der gesuchten und registrierten Hautleistenmuster für verschiedene Relativverschiebungen der gesuchten und registrierten Fingerabdrücke dargestellt ist; und der Ermittlung der Drehung und Parallelverschiebung, durch welche das gesuchte Hautleistenmuster am besten mit dem registrierten Hautleistenmuster zur Deckung gebracht wird durch Vergleich der Amplituden der grössten benachbarten Blöcke von Eintragungen in jedes der Histogramme.

11. Verfahren nach Anspruch 9 oder Anspruch 10, dadurch gekennzeichnet, dass es des weiteren aus dem Schritt der Beendigung des Vergleiches besteht, falls die grösste der maximalen Anzahl zueinander passender Paare nicht einen Schwellenwert überschreitet.

12. Verfahren nach einem der vorhergehenden Ansprüche 9 bis 11, dadurch gekennzeichnet, dass die Schritte a bis c bestehen aus der Wahl von Paaren registrierter und gesuchter Fingerabdrücke, für welche deren Richtungswerte sich um weniger als einen gewählten Uebereinstimmungs-Schwellenwert unterscheiden; und für jede diskrete Drehung, ein relatives Parallelverschieben der gesuchten und registrierten Fingerabdrücke um eine Anzahl Parallelverschiebungen, wobei bei jedem die Elemente der registrierten und gesuchten Hautleistenmuster eines der ausgewählten Paare genau miteinander übereinstimmen.

13. Verfahren nach einem der vorhergehenden Ansprüche 9 bis 12, dadurch gekennzeichnet, dass der Schritt der Berechnung eines individuellen Uebereinstimmung besteht, aus den Schritten der Berechnung einer Varianz der räumlichen und winkelmässigen Beziehungen zwischen Elementen registrierter und gesuchter Hautleistenmuster benachbarter Elementpaare von registrierten und gesuchten Hautleistenmustern; und Berechnung eines individuellen Hautleistenmuster-Uebereinstimmungswertes auf der Grundlage der Anzahl benachbarter Paare und der Varianz diester Paare.

## Revendications

1. Méthode employant un ordinateur programmé pour comparer les petits détails d'une empreinte digitale à identifier ("détails d'empreinte à identifier") avec les petits détails d'une empreinte digitale contenue dans un fichier ("détails d'empreinte de fichier") pour déterminer si l'empreinte à identifier ressemble étroitement à l'empreinte de fichier, comprenant: l'appariement des détails de l'empreinte à identifier (S1, S2 . . .) et des détails de l'empreinte de fichier (F1, F2 . . .) concordants, le calcul de scores ($S_M$) pour les paires individuelles de détails de l'empreinte à identifier et de détails de l'empreinte de fichier (S4, F2; S9, F14 . . .) concordants et l'addition des scores calculés ($S_M$) pour avoir un score final indicatif du niveau de ressemblance global de l'empreinte à identifier et de l'empreinte de fichier, ladite méthode étant caractérisée en ce que;

a) avant l'étape d'appariement, on procède à un mouvement de rotation et de translation de l'empreinte à identifier et de l'empreinte de fichier l'une par rapport à l'autre ($N_R$) pour déterminer une rotation (α) et une translation (ΔX, ΔY) particulières qui amènent la meilleure superposition possible des détails de l'empreinte à identifier (S1, S2 . . .) et des détails de l'empreinte de fichier (F1, F2 . . .) (Figure 5, $M_M$*),

b) on procède à l'étape d'appariement des détails de l'empreinte à identifier et des détails de l'empreinte de fichier (S4, F2, S9, F14 . . .) concordants sur la base de la rotation et de la translation choisies, et

c) on calcule le score ($S_M$) individuel pour chaque détail de l'empreinte à identifier (S1, S2) qui a un détail de l'empreinte de fichier qui lui correspond à partir de la relation angulaire et spatiale entre les autres détails de l'empreinte à identifier et les détails de l'empreinte de fichier concordants situés dans le voisinage de ce détail à identifier (S1, S2 . . .) (Tableaux 7(c), 7(a)), cette étape de calcul du score individuel comprenant les étapes suivantes:

(c1) calcul de la variance ($\sigma^2$) des relations spatiales et angulaires entre les détails de l'empreinte de fichier et les détails de l'empreinte à identifier des paires voisines de détails de l'empreinte à identifier et de détails de l'empreinte de fichier (Tableaux 7(b), 7(d)) et

(c2) calcul d'un score individuel ($S_M$) à partir du nombre de paires voisines ($N_M$) et de la variance ($\sigma^2$) de ces paires.

2. Méthode selon la revendication 1, où dans l'étape c2, on choisit un score individuel qui augmente avec le nombre de paires voisines et diminue lorsque le degré de la variance augmente.

3. Méthode selon la revendication 2, où le score individuel est choisi à partir d'un tableau de scores portant dans un sens le nombre de paires voisines et dans l'autre sens la variance, ce tableau ayant des entrées dénotant des scores qui augmentent dans le premier sens lorsque le nombre de paires voisines augmente et qui diminuent dans l'autre sens lorsque la magnitude de la variance augmente.

4. Méthode selon la revendication 1, comportant une étape où l'on choisit un nombre de paires voisines de détails de l'empreinte de fichier et de l'empreinte à identifier distantes d'un détail individuel dans une direction quelconque d'une distance n'excédant pas un certaine valeur prédéterminée.

5. Méthode selon l'une quelconque des revendications qui précèdent, où les variances sont obtenues

**0 050 842**

en faisant la moyenne de la somme des carrés des différences en translation et en rotation entre les détails de l'empreinte de fichier et les détails de l'empreinte à identifier de paires respectives.

6. Méthode selon l'une quelconque des revendications qui précèdent, comprenant en outre:
(a) le classement des détails de l'empreinte à identifier par ordre angulaire,
(b) la détection des voisins les plus proches pour chaque détail de l'empreinte à identifier;
(c) le classement des détails de l'empreinte de fichier par ordre angulaire; et
(d) le calcul des coordonnés maximum et minimum des détails de l'empreinte de fichier.

7. Méthode selon l'une quelconque des revendications 1 à 3, où dans l'étape a) on arrête la comparaison entre les détails de l'empreinte à identifier et de l'empreinte de fichier chaque fois que le degré de concordance des détails de l'empreinte à identifier et des détails de l'empreinte de fichier n'arrive pas à atteindre une certaine valeur fixée par l'opérateur.

8. Méthode selon l'une quelconque des revendications qui précèdent, où l'étape de rotation et de translation comprend de:
(a) faire passer les détails de l'empreinte à identifier par une suite de rotations préalablement choisies;
(b) pour chaque suite de rotations des détail de l'empreinte à identifier, construire un histogramme montrant le nombre de détails de l'empreinte à identifier et de détails de l'empreinte de fichier qui coïncident pour différentes translations des détails de l'empreinte à identifier par rapport aux détails de l'empreinte de fichier; et
(c) déterminer quelle rotation et quelle translation font concorder le mieux possible les détails de l'empreinte à identifier et les détails de l'empreinte de fichier en comparant la magnitude des blocks d'entrée adjacents les les plus importants dans chacun des histogrammes.

9. Méthode pour comparer les petit détails d'une empreinte digitale à identifier (détails d'empreinte à identifier) avec les petits détails d'une empreinte digitale de fichier (détail l'empreinte de fichier) pour déterminer si deux empreintes digitales concordent comprenant une étape d'appariement des détails de l'empreinte à identifier (S1, S2 . . .) et des détails de l'empreinte de fichier (F1, F2), le calcul des scores ($S_M$) pour les paires individuelles de détails de l'empreinte à identifier et de détails de l'empreinte de fichier concordants (S4, F2; S9, F14 . . .), l'addition des scores calculés ($S_M$) pour avoir un score de concordance final indicatif du niveau de ressemblance global de l'empreinte à identifier et de l'empreinte de fichier, ladite méthode étant caractérisé en ce que:
(a) avant l'étape d'appareillement, on procède à une suite de rotations discrètes relatives de l'empreinte à identifier et de l'empreinte de fichier ($N_R$),
(b) on détermine pour chaque rotation ($\alpha$) une translation ($\Delta X$, $\Delta Y$) de l'empreinte à identifier qui produit le nombre maximum ($M_M{}^*$) de paires de détails de l'empreinte de fichier et de paires de détails de l'empreinte à identifier concordantes (Figure 5), et
(c) on choisit la rotation ($\alpha$) et le translation ($\Delta X$, $\Delta Y$) qui produisent le plus grand ($M_M{}^*$) des nombres maximum de paires concordantes.

10. Méthode selon la revendication 9, où les étapes b et c comprennent: de construire pour chaque rotation discrète un histogramme montrant le nombre de détails de l'empreinte à identifier et de détails de l'empreinte de fichier concordants pour les différentes transations de l'empreinte à identifier par rapport à l'empreinte de fichier; et de déterminer la rotation et la translation qui amènent la meilleure concordance des détails de l'empreinte à identifier avec les détails de l'empreinte de fichier en comparant la magnitude des blocks d'entrée adjacents les plus grands de chacun des histogrammes.

11. Méthode selon la revendication 9 ou 10, comportant en outre une étape ou l'on termine la comparaison lorsque le plus grand des nombres maximum de paires concordantes ne dépasse pas un certain niveau.

12. Méthode selon l'une quelconque des revendications 9 à 11, où les étapes a à c comprennent de choisir des paires de détails de l'empreinte de fichier et de détails de l'empreinte à identifier dont les valeurs de direction diffèrent d'une valeur inférieure à une valeur de concordance limite; et pour chaque rotation discrète de procèderà un certain nombre de translations relatives de l'empreinte à identifier et de l'empreinte de fichier, à la fin de quoi les détails de l'empreinte à identifier et de l'empreinte de fichier d'une des paires choisies coïncident les uns avec les autres.

13. Méthode selon l'une quelconque des revendications 9 à 12, où l'étape de calcul du score individuel comprend une étape de calcul d'une variance des relations spatiale et angulaire entre les détails de l'empreinte de fichier et les détails de l'empreinte à identifier de paires voisines de détails de l'empreinte de fichier et de détails de l'empreinte de fichier et de l'empreinte à identifier; et d'un score de détail individuel basé sur le nombre de paires voisines et de la variance de ces paires.

FIG. 1A — SEARCH MINUTIA

FIG. 1B — FILE MINUTIA

FIG. 1C — SEARCH MINUTIA SUPERIMPOSED ON FILE MINUTIA

FIG. 2A

MATING
MINUTIA PAIRS

FIG. 2B

NON-MATING
MINUTIA PAIRS

(ANGLE DIFFERENCE
TOO LARGE)

FIG. 2C

MULTIPLE MATING
POSSIBILITIES

FIG. 3

# 0 050 842

SEARCH MINUTIA PATTERN

TRANSLATION EQUATIONS:

$$\Delta X = X_S - X_F + 2$$
$$\Delta Y = Y_S - Y_F$$

FIG. 4A

FILE PRINT MINUTIA PATTERN

FIG. 4B

FIG. 7

| ΔY \ ΔX | -26, -25 | -24, -23 | -22, -21 | -20, -19 | -18, -17 | -16, -15 | -14, -13 | -12, -11 | -10, -9 | -8, -7 | -6, -5 | -4, -3 | -2, -1 | 0, 1 | 2, 3 | 4, 5 | 6, 7 | 8, 9 | 10, 11 | 12, 13 | 14, 15 | 16, 17 | 18, 19 | 20, 21 | 22, 23 | 24, 25 | 26, 27 |
|---|---|---|---|---|---|---|---|---|---|---|---|---|---|---|---|---|---|---|---|---|---|---|---|---|---|---|---|
| 27,26 | | | | | | | | | | | | | | | | | | | | | | | | | | | |
| 25,24 | | | | | | | | | | | | | | | | | | | | | 1 | | | | | | |
| 23,22 | | | | | | | | | | | | | | | | | | | | | | 1 | | | | | |
| 21,20 | | | | | | | | | | | | | | | | | | | | | | | | | | 1 | |
| 19,18 | | | | | | | | | | | | | | | | | | | | | | | | | | | |
| 17,16 | | | | | | | | | | | | | | | | | | | | | | | | | | | |
| 15,14 | | | | | | | | | | | | | 1 | | | | 1 | | | | | | | | | | |
| 13,12 | | | | | | | | 1 | | | | | | | | | | | | | 2 | | | | | | |
| 11,10 | | | | | | | | | | | | | | | | | | | | 2 | 4 | | | | | | |
| 9,8 | | | | | | | | | | | | | | | | | | | | | | | | | | | |
| 7,6 | | | | | | | | | | | | | | | | | | | | | | | | | | | |
| 5,4 | | | | | | | | | 1 | | | | | | | | | | | | | | | | | 1 | |
| 3,2 | | | | | | | | | | | | | | | | | | | | | | | | | | | |
| 1,0 | | | | | | | | 1 | | | | | 1 | | | | | | 1 | 1 | | | | | | | |
| -1,-2 | | | | | | | | | | | | | | | | | | | | | | | | | | | |
| -3,-4 | | | | | | | | 1 | | | | | | | | | | | | | | | | | | | |
| -5,-6 | | | | | | | | | | | | | 1 | | | | | | | | 1 | | | | | | |
| -7,-8 | | | | | | | | | | | | | | | | | | | | | | | | | | | |
| -9,-10 | | | | | | | | | | | | | | | | | | | | | | | | | | | |
| -11,-12 | | | | | | | | | | | | | | | | | | | | | | | | | | | |
| -13,-14 | | | | | | | | | | | | | | | | | | | | | | | | | | | |
| -15,-16 | | | | | | | | 1 | | | | | | | | | | | | | 1 | | | | | | |
| -17,-18 | | | | | | | | | | | | | | | | | | | | | | | | | | | |
| -19,-20 | | | | | | | | | | | | | | | | | | | | | | | | | | 1 | |
| -21,-22 | | | | | | | | | | | | | | | | | | | | | | | | | | | |
| -23,-24 | | | | | | | | | | | | | | | | | | | | | | | | | | | |
| •25,-26 | | | | | | | | | | | 1 | | | | | | | | | | | | | | | | |

FIG. 5

START → ┌─────────────────────────────┐
        │ LIST, FOR EACH SEARCH MINUTIA, IN │
        │ ASCENDING ORDER OF CLOSENESS, ALL │
        │ FILE MINUTIA WHICH ARE CLOSE TO IT. │
        └─────────────────────────────┘

┌─────────────────────────────┐
│ GET NEXT MINUTIA PAIRING FROM LIST. │
│ OVERLAY SEARCH MINUTIA ON FILE │
│ MINUTIA. │
└─────────────────────────────┘

┌─────────────────────────────┐
│ FORM NHIT LIST GIVING FILE MINUTIA │
│ WHICH ARE "CLOSE" TO NEIGHBORING │
│ SEARCH MINUTIA.  ORDER ON │
│ ASCENDING VALUES OF CLOSENESS. │
└─────────────────────────────┘

┌─────────────────────────────┐
│ ELIMINATE DUPLICATE FILE MINUTIA │
│ FROM NHIT LIST BY MAXIMIZING FIRST, │
│ NO. OF NEIGHBORS HAVING MATING │
│ FILE MINUTIA, AND SECOND, CLOSENESS │
│ OF MINUTIA PAIRS. │
└─────────────────────────────┘

┌─────────────────────────────┐
│ FIND SCORE FOR THIS MINUTIA PAIR │
│ BASED ON NUMBER OF MATING │
│ NEIGHBORS AND VARIANCE OF FIT. │
│ ENTER THE SCORE INTO THE HIT LIST │
│ IN PLACE OF CLOSENESS MEASURE. │
└─────────────────────────────┘

YES ┌─────────────────────────────┐
    │ MORE ENTRIES IN INITIAL HIT LIST? │
    └─────────────────────────────┘
             NO

┌─────────────────────────────┐
│ ORDER HIT ARRAY ENTRIES FOR EACH │
│ SEARCH MINUTIA BASED ON SCORE. │
└─────────────────────────────┘

┌─────────────────────────────┐
│ CONSIDERING ONLY THE FIRST TWO │
│ FILE ENTRIES FOR EACH SEARCH │
│ MINUTIA IN THE HIT LIST, ELIMINATE │
│ DUPLICATE FILE MINUTIA BASED ON │
│ MAXIMIZING TOTAL MATCH SCORE AS │
│ DETERMINED ON A "TWO-PAIR" BASIS. │
└─────────────────────────────┘

┌─────────────────────────────┐
│ SUM INDIVIDUAL SEARCH MINUTIA │      → RETURN
│ SCORES TO GET TOTAL MATCH │
│ SCORE. │
└─────────────────────────────┘

FIG. 6

5

0 050 842

FIG.8

6

FIG.9